# EUROPEAN PATENT SPECIFICATION

(11) **EP 2 688 390 B1**
(45) Date of publication and mention of the grant of the patent: **12.08.2015**
(21) Application number: 12718404.2
(22) Date of filing: 26.03.2012
(51) Int. Cl.: A01F 15/07

(54) **MONITORING APPARATUS AND A METHOD FOR DETECTING CORRECT CIRCUMFERENTIAL WRAPPING OF A BALE OF MATERIAL**
ÜBERWACHUNGSAPPARAT UND -METHODE ZUM FESTSTELLEN DER KORREKTEN UMFANGSUMHÜLLUNG EINES BALLENS
DISPOSITIF ET PROCÉDÉ POUR DÉTECTER L'EMBALLAGE CORRECT D'UNE BALLE

(30) Priority: 25.03.2011 IE S110137; 07.11.2011 IE S110481
(43) Date of publication of application: 29.01.2014
(73) Proprietor: McHale Engineering, Ballinrobe Mayo (IE)
(72) Inventor: MCHALE, Padraic, Christopher, Clonbur, County Galway (IE); MCHALE, Martin, William, County Mayo (IE); MCHALE, Paul, Gerard, Galway (IE); BIGGINS, John, Patrick, Hollymount, County Mayo (IE); HEANEY, James, John, Claremorris, County Mayo (IE); COLLINS, Donal, Patrick, Dunmore, County Galway (IE); CUNNIFFE, Eamonn, Edward, Michael, Castlerea, County Roscommon (IE); WARREN, John, Alexander, Grange, County Sligo (IE); KILLEEN, Terence, Patrick, Claremorris, County Mayo (IE); LOHAN, Gerald, Anthony, Castlebar, County Mayo (IE); SHERIDAN, Gerard, Patrick, Kilmaine, County Mayo (IE); MCDERMOTT, Karol, Angelo, Moville, County Donegal (IE)
(74) Representative: Gorman, Francis Fergus
(86) International application number: PCT/IE2012/000013
(87) International publication number: WO 2012/131664

(56) References cited:
- EP-A- 1 461 995
- DE-A1- 10 011 158

## Description

The present invention relates to monitoring apparatus and a method for detecting correct circumferential wrapping of a bale of material, such as a cylindrical bale in a bale forming chamber of a baler, and in particular, though not limited to monitoring apparatus and a method for detecting correct circumferential wrapping of a bale of forage material, for example, silage, hay, straw and the like in a bale forming chamber of a baler. The invention also relates to a baler for forming a circumferentially wrapped bale of material.

Balers for forming cylindrical bales of forage material, such as silage, hay, straw and other forage materials are known. Such balers, in general, form the material into a cylindrical bale of diameter of approximately 1.25 metres, and of axial length of approximately 1.25 metres. Such bales, in general, although cylindrical, are commonly referred to as round bales.

Such balers may be of the type commonly referred to as fixed chamber balers, such as those described in PCT published Patent Applications Specifications Nos. WO 02/076183 and WO 02/076184, or they may be of the type commonly referred to as belt balers in which a plurality of side by side belts are configured to form a bale forming chamber of variable size as the bale is being formed. Other such balers may be of the type which comprise a combination of belts with bale rotating rollers. A monitoring apparatus and a baler with the features of the preamble of claim 10 respectively claim 14 are known from EP-A-1461995.

However, irrespective of the type of baler, it is necessary to circumferentially wrap or bind such bales in a bale forming chamber of the apparatus with suitable wrapping or binding material prior to discharge of the formed bale from the bale forming chamber in order to retain the formed bale in its cylindrical form, and in particular, to avoid unravelling and disintegrating of the formed bale as the bale is being discharged from the bale forming chamber. One type of wrapping material is a net type material, and another type of wrapping material is plastics film material, of the type commonly used in a bale wrapper for wrapping cylindrical bales of silage after the bale has been discharged from a baler. Such plastics film material may or may not be adhesive coated on one major surface thereof.

In such apparatus where a formed bale is wrapped in the bale forming chamber, the apparatus comprises a dispenser for the wrapping material which dispenses the wrapping material into the bale forming chamber, so that as the formed bale is being rotated in the bale forming chamber, the wrapping material is drawn circumferentially onto the formed bale, and wrapped around the circumference of the formed bale. The wrapping material is tensioned as it is being wrapped onto the bale in order to tightly compact the material of the bale adjacent the outer circumferential periphery thereof.

However, in such apparatus during the application of a first turn of the wrapping material around the circumference of the formed bale in the bale forming chamber, it is not uncommon for the wrapping material to become entangled in elements which are provided in the apparatus and which operate to form and rotate the bale in the bale forming chamber. When wrapping material does become so entangled, detection of the failure of wrapping of the bale is difficult, and a bale may be discharged from the bale forming chamber without being wrapped. Discharge of an unwrapped bale from the bale forming chamber leads to immediate unravelling and disintegration of the formed bale. This is unsatisfactory, in that firstly, it leads to significant downtime of the baler, since the baler must be cleaned out to remove loose material from the disintegrated bale, and wrapping material which has become entangled in the baler must also be removed.

There is therefore a need for apparatus and a method which addresses this problem.

The present invention is directed towards providing a method and monitoring apparatus for detecting correct circumferential wrapping of a bale of material in a bale forming chamber of a baler, and the invention is also directed towards providing a baler for forming a circumferentially wrapped bale of material.

According to the invention there is provided a method for detecting correct circumferential wrapping of a bale of material in a bale forming chamber of a baler with wrapping material, the method comprising monitoring a characteristic indicative of the radial outward pressure exerted by the bale in the bale forming chamber during dispensing of the wrapping material into the bale forming chamber, determining correct circumferential wrapping of the bale in response to the monitored characteristic being indicative of one of a reduction in the radial outward pressure exerted by the bale in the bale forming chamber and a change in the rate of reduction in the radial outward pressure exerted by the bale in the bale forming chamber.

In one aspect of the invention correct circumferential wrapping of the bale is determined in response to the monitored characteristic being indicative of the reduction in the radial outward pressure exerted by the bale exceeding a predefined pressure drop.

Preferably, correct circumferential wrapping of the bale is determined in response to the monitored characteristic being indicative of the reduction in the radial outward pressure exerted by the bale exceeding the predefined pressure drop within a predefined period from the commencement of dispensing of the wrapping material into the bale forming chamber.

Advantageously, the value of the predefined pressure drop is greater than the value of a pressure drop in the radial outward pressure which would be exerted by the bale in the bale forming chamber if the bale were rotated in the bale forming chamber during the predefined period without being circumferentially wrapped.

Alternatively, correct circumferential wrapping of the bale is determined in response to the monitored characteristic being indicative of a change in the rate of reduction of the radial outward pressure exerted by the bale being greater than a predefined change in the rate of reduction of the radial outward pressure exerted by the bale.

Preferably, correct circumferential wrapping of the bale is determined in response to the monitored characteristic being indicative of the change in the rate of reduction of the radial outward pressure exerted by the bale being greater than the predefined change within a predefined period from commencement of dispensing of the wrapping material into the bale forming chamber.

Advantageously, the value of the predefined change in the rate of reduction of the radial outward pressure exerted by the bale in the bale forming chamber is greater than the maximum value of a change in the rate of reduction of the radial outward pressure exerted by the bale in the bale forming chamber which would occur if the bale were being rotated in the bale forming chamber during the predefined period without being circumferentially wrapped.

In one aspect of the invention the method is adapted for use with a baler comprising a housing defining the bale forming chamber therein, and the monitored characteristic is a characteristic indicative of a compressive radial force exerted by the housing on the bale in the bale forming chamber.

Preferably, the housing of the baler comprises at least two parts, the parts of the housing together defining the bale forming chamber, and being urged together by an urging means to form the bale forming chamber, the monitored characteristic being a characteristic indicative of the force being applied by the urging means to urge the parts of the housing together.

Advantageously, the urging means comprises at least one fluid operated ram, and the monitored characteristic is the fluid pressure in the ram urging the parts of the housing together.

Alternatively, the monitored characteristic is a characteristic indicative of movement of one of the parts of the housing relative to the other.

In another aspect of the invention the monitored characteristic is indicative of a characteristic of the circumference of the bale.

In a further aspect of the invention the monitored characteristic is a characteristic indicative of the diameter of the bale.

In one aspect of the invention the wrapping material comprises sheet material. In another aspect of the invention the wrapping material comprises sheet material of plastics material. In a further aspect of the invention the wrapping material comprises sheet material having an adhesive coating on one major surface thereof.

In an alternative aspect of the invention the wrapping material comprises a net material.

The invention also provides monitoring apparatus for detecting correct circumferential wrapping of a bale of material in a bale forming chamber of a baler with wrapping material, the monitoring apparatus comprising a monitoring means adapted to monitor a characteristic indicative of the radial outward pressure exerted by the bale in the bale forming chamber during dispensing of the wrapping material into the bale forming chamber, and a means for determining correct circumferential wrapping of the bale, the means for determining correct circumferential wrapping of the bale being adapted to be responsive to the monitored characteristic monitored by the monitoring means being indicative of one of a reduction in the radial outward pressure exerted by the bale in the bale forming chamber, and a change in the rate of reduction in the radial outward pressure exerted by the bale in the bale forming chamber for determining correct circumferential wrapping of the bale.

In one aspect of the invention the means for determining correct circumferential wrapping of the bale is responsive to the monitored characteristic monitored by the monitoring means being indicative of the reduction in the radial outward pressure exerted by the bale exceeding a predefined pressure drop for determining correct circumferential wrapping of the bale.

Preferably, the means for determining correct circumferential wrapping of the bale is responsive to the monitored characteristic monitored by the monitoring means being indicative of a reduction in the radial outward pressure exerted by the bale exceeding the predefined pressure drop within a predefined period from the commencement of dispensing of the wrapping material into the bale forming chamber for determining correct circumferential wrapping of the bale.

Advantageously, the value of the predefined pressure drop is greater than the value of a pressure drops in the radial outward pressure which would be exerted by the bale in the bale forming chamber if the bale were rotated in the bale forming chamber during the predefined period without being circumferentially wrapped.

In an alternative aspect of the invention the means for determining correct circumferential wrapping of the bale is responsive to the monitored characteristic monitored by the monitoring means being indicative of a change in the rate of reduction in the radial outward pressure exerted by the bale being greater than a predefined change in the rate of reduction of the radial outward pressure exerted by the bale for determining correct circumferential wrapping of the bale.

Preferably, the means for determining correct circumferential wrapping of the bale is responsive to the monitored characteristic monitored by the monitoring means being indicative of a change in the rate of reduction in the radial outward pressure exerted by the bale being greater than the predefined change within a predefined period from the commencement of dispensing of the wrapping material into the bale forming chamber for determining correct circumferential wrapping of the bale.

Advantageously, the value of the predefined change in the rate of reduction of the radial outward pressure exerted by the bale in the bale forming chamber is greater than the maximum value of a change in the rate of reduction of the radial outward pressure exerted by the bale in the bale forming chamber which would occur if the bale were being rotated in the bale forming chamber during the predefined period without being circumferentially wrapped.

In one aspect of the invention the monitoring means is adapted to produce a signal indicative of the characteristic monitored by the monitoring means.

In another aspect of the invention the means for determining correct circumferential wrapping of the bale comprises a signal processing means adapted for reading signals from the monitoring means.

Preferably, the signal processing means is adapted to process the signals read from the monitoring means to determine if the signals read from the monitoring means are indicative of the monitored characteristic being indicative of one of a reduction in the radial outward pressure exerted by the bale in the bale forming chamber and a change in the rate of reduction in the radial outward pressure exerted by the bale in the bale forming chamber.

In one aspect of the invention the signal processing means is adapted to produce a signal indicative of correct circumferential wrapping of the bale in response to the signals read from the monitoring means being indicative of the monitored characteristic being indicative of one of a reduction in the radial outward pressure exerted by the bale in the bale forming chamber and a change in the rate of reduction in the radial outward pressure exerted by the bale in the bale forming chamber.

Preferably, the signal processing means is adapted to produce a signal indicative of correct circumferential wrapping of the bale in response to the signal read from the monitoring means being indicative of the monitored characteristic being indicative of a reduction in the radial outward pressure exerted by the bale in the bale forming chamber exceeding the predefined pressure drop.

Advantageously, the signal processing means is adapted for producing the signal indicative of correct circumferential wrapping of the bale in response to the signals read from the monitoring means being indicative of the monitored characteristic being indicative of the reduction in the radial outward pressure exerted by the bale in the bale forming chamber being greater than the predefined reduction within the predefined period from the commencement of dispensing of the wrapping material into the bale forming chamber.

In an alternative embodiment of the invention the signal processing means is adapted to produce a signal indicative of correct circumferential wrapping of the bale in response to the signals read from the monitoring means being indicative of the monitored characteristic being indicative of a change in the rate of reduction in the radial outward pressure exerted by the bale in the bale forming chamber being greater than the predefined change in the rate of reduction in the radial outward pressure exerted by the bale.

Preferably, the signal processing means is adapted to produce a signal indicative of correct circumferential wrapping of the bale in response to the signal read from the monitoring means being indicative of the monitored characteristic being indicative of the change in the rate of reduction in the radial outward pressure exerted by the bale in the bale forming chamber being greater than the predefined change within the predefined period from commencement of dispensing of the wrapping material into the bale forming chamber.

Advantageously, the signal processing means is adapted to produce a signal indicative of failure of correct circumferential wrapping of the bale at the end of the predefined period from commencement of dispensing of the wrapping material into the bale forming chamber in response to the signals processed by the signal processing means failing to be indicative of correct circumferential wrapping of the bale during the predefined period from the commencement of dispensing of wrapping material into the bale.

In one aspect of the invention the monitoring apparatus is adapted for use with a baler comprising a housing defining the bale forming chamber therein, and the characteristic indicative of the radial outward pressure exerted by the bale monitored by the monitoring means comprises a characteristic indicative of a compressive radial force exerted by the housing on the bale in the bale forming chamber.

Preferably, the housing of the baler comprises at least two parts, the parts of the baler together defining the bale forming chamber and being urged together by an urging means to form the bale forming chamber.

In one embodiment of the invention the characteristic indicative of the radial outward pressure exerted by the bale monitored by the monitoring means comprises a characteristic indicative of the force being applied by the urging means to urge the parts of the housing together.

Preferably, the urging means for urging the parts of the housing together comprises at least one fluid operated ram, and the characteristic indicative of the radial outward pressure exerted by the bale monitored by the monitoring means comprises a characteristic indicative of the fluid pressure in the ram urging the parts of the housing together.

Advantageously, the monitoring means comprises a pressure transducer for monitoring pressure of the fluid in the ram urging the parts of the housing together.

In an alternative embodiment of the invention the characteristic indicative of the radial outward pressure exerted by the bale which is monitored by the monitoring means comprises a characteristic indicative of movement of one of the parts of the housing relative to the other.

Preferably, the characteristic indicative of the radial outward pressure exerted by the bale monitored by the monitoring means comprises a characteristic indicative of movement of one of the parts of the housing towards the other part thereof.

Advantageously, the monitoring means comprises a sensing means mounted on one of the parts of the housing for monitoring the movement of the one of the parts of the housing towards the other part thereof.

In another aspect of the invention the characteristic indicative of the radial outward pressure exerted by the bale monitored by the monitoring means comprises a characteristic indicative of a characteristic of the circumference of the bale, and the monitoring means is adapted to monitor the characteristic indicative of a characteristic of the circumference of the bale.

In a further aspect of the invention the characteristic indicative of the radial outward pressure exerted by the bale monitored by the monitoring means comprises a characteristic indicative of the diameter of the bale, and the monitoring means is adapted for monitoring the characteristic indicative of the diameter of the bale.

Preferably, the monitoring means is adapted for monitoring the diameter of the bale.

In one embodiment of the invention the monitoring means comprises a bale follower element extending into the bale forming chamber engageable with the circumferential surface of the bale, and the characteristic indicative of the radial outward pressure exerted by the bale monitored by the monitoring means is radial movement of the bale follower element.

In one aspect of the invention the monitoring apparatus is adapted for detecting correct circumferential wrapping of the bale with sheet wrapping material. In another aspect of the invention the sheet wrapping material comprises plastics sheet wrapping material. In another aspect of the invention the sheet wrapping material comprises an adhesive coating on one major surface thereof.

In a further aspect of the invention the monitoring apparatus is adapted for detecting correct circumferential wrapping of the bale with net material.

In one aspect of the invention the monitoring apparatus is adapted for detecting correct circumferential wrapping of a cylindrical bale.

Additionally the invention provides a baler for forming material into a circumferentially wrapped cylindrical bale, the baler defining a bale forming chamber within which the material is formed into a bale, a dispensing means for dispensing wrapping material into the bale forming chamber for circumferentially wrapping a formed bale therein, monitoring apparatus according to the invention for detecting correct circumferential wrapping of the bale with the wrapping material, and a control means for controlling dispensing of the wrapping material into the bale forming chamber, the control means being responsive to the absence of the signal from the monitoring apparatus indicative of correct circumferential wrapping of the bale for terminating circumferential wrapping of the bale in the bale forming chamber:

In one aspect of the invention the control means is responsive to the absence of the signal from the monitoring apparatus indicative of correct circumferential wrapping of the bale within a predefined period from the commencement of dispensing of the wrapping material into the bale forming chamber for terminating circumferential wrapping of the bale.

Preferably, the control means is responsive to the signal from the monitoring apparatus indicative of failure of correct circumferential wrapping of the bale for terminating wrapping of the bale.

Advantageously, the baler comprises a housing comprising at least two parts, the parts of the housing together defining the bale forming chamber, and an urging means for urging the parts of the housing together to form the bale forming chamber.

In one embodiment of the invention the monitoring means of the monitoring apparatus is adapted to monitor the force being applied by the urging means for urging the parts of the housing together.

Preferably, the urging means comprises at least one fluid operated ram, and the monitoring means of the monitoring apparatus comprises a pressure transducer adapted for monitoring pressure of fluid in the at least one ram urging the parts of the housing together.

Advantageously, the signal processing means of the monitoring apparatus is responsive to a signal from the pressure transducer being indicative of one of a reduction in the fluid pressure monitored by the pressure transducer and a change in the rate of reduction in the fluid pressure monitored by the pressure transducer, which is indicative of the respective one of the reduction in the radial outward pressure being exerted by the bale in the bale forming chamber and the change in the rate of reduction in the radial outward pressure being exerted by the bale in the bale forming chamber, for producing the signal indicative of correct circumferential wrapping of the bale.

Preferably, the signal processing means of the monitoring apparatus is responsive to a signal from the pressure transducer being indicative of a reduction in the fluid pressure monitored by the pressure transducer being greater than a predefined fluid pressure drop, which is indicative of the reduction in the radial outward pressure exerted by the bale in the bale forming chamber exceeding the predefined pressure drop, for producing the signal indicative of correct circumferential wrapping of the bale.

Advantageously, the signal processing means of the monitoring apparatus is responsive to a signal from the pressure transducer being indicative of the reduction in the fluid pressure monitored by the pressure transducer being greater than the predefined fluid pressure drop within the predefined period from commencement of dispensing of the wrapping material into the bale forming chamber for producing the signal indicative of correct circumferential wrapping of the bale.

Alternatively, the signal processing means of the monitoring apparatus is responsive to a signal from the pressure transducer being indicative of a change in the rate of reduction of the fluid pressure monitored by the pressure transducer being greater than a predefined change in the rate of reduction of the monitored fluid pressure, which is indicative of the change in the rate of reduction in the radial outward pressure exerted by the bale in the bale forming chamber being greater than the predefined change in the rate of reduction of the radial outward pressure exerted by the bale, for producing the signal indicative of correct circumferential wrapping of the bale.

Preferably, the signal processing means of the monitoring apparatus is responsive to a signal from the pressure transducer being indicative of the change in the rate of reduction of the fluid pressure monitored by the pressure transducer being greater than the predefined change in the rate of reduction of the fluid pressure within a predefined period from the commencement of dispensing of the wrapping material into the bale forming chamber for producing the signal indicative of correct circumferential wrapping of the bale.

In one embodiment of the invention fluid is supplied through a selectively operable check valve to the at least one fluid operated ram for urging the parts of the housing together to form the bale forming chamber, and a fluid accumulator is located between the at least one ram and the check valve, the pressure transducer being located between the fluid operated ram and the check valve.

Preferably, the check valve is configured to be operable in a first non-return state at least during the predefined period from the commencement of dispensing of the wrapping material into the bale forming chamber to prevent return of fluid from the at least one fluid operated ram, so that the fluid pressure being monitored by the pressure transducer during the predefined period is indicative of the radial outward pressure being exerted by the bale in the bale forming chamber. Advantageously, the at least one fluid operated ram comprises an hydraulic ram.

In another aspect of the invention one of the parts of the housing is moveable relative to the other part of the housing between a bale forming state with the two parts of the housing defining the bale forming chamber, and a discharge state for accommodating a wrapped formed bale from the bale forming chamber.

Preferably, the urging means for urging the parts of the housing together is adapted for urging the moveable part of the housing between the bale forming state to the discharge state.

In an alternative embodiment of the invention the monitoring means is adapted for monitoring relative movement of one of the parts of the housing relative to the other part thereof.

Preferably, the monitoring means is adapted for monitoring movement of one of the parts of the housing towards the other part of the housing.

Advantageously, the signal processing means of the monitoring apparatus is responsive to a signal from the monitoring means being indicative of one of a reduction in the spacing between the two parts of the housing and a change in the rate of reduction in the spacing between the two parts of the housing, which is indicative of the respective one of the reduction in the radial outward pressure being exerted by the bale in the bale forming chamber and the change in the rate of reduction in the radial outward pressure being exerted by the bale in the bale forming chamber, for producing the signal indicative of correct circumferential wrapping of the bale.

Advantageously, the signal processing means of the monitoring apparatus is responsive to a signal from the monitoring means being indicative of the reduction in the spacing between the two parts of the housing being greater than a predefined reduction, which is indicative of the reduction in the radial outward pressure exerted by the bale in the bale forming chamber exceeding the predefined pressure drop, for producing the signal indicative of correct circumferential wrapping of the bale.

In one aspect of the invention the signal processing means of the monitoring apparatus is responsive to a signal from the monitoring means being indicative of the reduction in the spacing between the two parts of the housing being greater than the predefined reduction within a predefined period from commencement of dispensing of the wrapping material into the bale forming chamber for producing the signal indicative of correct circumferential wrapping of the bale.

Alternatively, the signal processing means of the monitoring apparatus is responsive to a signal from the monitoring means being indicative of a change in the rate of reduction in the spacing between the two parts of the housing being greater than a predefined change in the spacing, which is indicative of the change in the rate of reduction in the radial outward pressure exerted by the bale in the bale forming chamber being greater than the predefined change in the rate of reduction of the radial outward pressure exerted by the bale, for producing the signal indicative of correct circumferential wrapping of the bale.

Preferably, the signal processing means of the monitoring apparatus is responsive to a signal from the monitoring means being indicative of a change in the rate of reduction in the spacing between the two parts of the housing being greater than the predefined change in the spacing within a predefined period from the commencement of dispensing of the wrapping material into the bale forming chamber for producing the signal indicative of correct circumferential wrapping of the bale.

Advantageously, the monitoring means comprises a sensing means mounted on one of the parts of the housing for monitoring the relative movement between the parts of the housing.

Preferably, the sensing means for monitoring movement between the parts of the housing comprises a proximity sensor.

In one aspect of the invention the sensing means for monitoring movement between the parts of the housing comprises one of a linear transducer and a linear inductive sensor.

In another aspect of the invention the sensing means for monitoring movement between the fixed points of the parts of the housing comprises a potentiometer sensor.

In an alternative aspect of the invention the monitoring means of the monitoring apparatus is adapted to monitor a characteristic indicative of a characteristic of the circumference of the bale.

Preferably, the monitoring means of the monitoring apparatus is adapted for monitoring a characteristic indicative of the diameter of the bale.

Advantageously, the monitoring means is adapted for monitoring the diameter of the bale.

In a further aspect of the invention the monitoring means comprises a bale follower element mounted on the baler and adapted to engage the circumferential surface of the bale, and a sensing means adapted to monitor radial movement of the bale follower element.

Preferably, the bale follower element is located adjacent the periphery of the bale forming chamber an angular distance from a wrapping material inlet through which the wrapping material is dispensed into the bale forming chamber which lies in the range of 180° to 340°.

Advantageously, the angular distance of the bale follower element from the wrapping material inlet lies in the range of 240° to 300°. Ideally, the angular distance of the bale follower element from the wrapping material inlet is approximately 270°.

In one aspect of the invention the sensing means for monitoring radial movement of the bale follower element comprises a proximity sensor.

In another aspect of the invention the sensing means for monitoring radial movement of the bale follower element comprises one of a linear transducer and a linear inductive sensor.

In a further aspect of the invention the sensing means for monitoring radial movement of the bale follower comprises a potentiometer sensor.

Ideally, the bale follower element comprises a rotatably mounted bale follower roller.

Preferably, the signal processing means is responsive to a signal from the monitoring means being indicative of a reduction in the diameter of the bale, which is indicative of the reduction in the radial outward pressure exerted by the bale in the bale forming chamber, for producing the signal indicative of correct circumferential wrapping of the bale.

Advantageously, the signal processing means is responsive to a signal from the monitoring means being indicative of a reduction in the diameter of the bale being greater than a predefined diameter reduction, which is indicative of the reduction in the radial outward pressure exerted by the bale in the bale forming chamber exceeding the predefined pressure drop, for producing the signal indicative of correct circumferential wrapping of the bale.

Preferably, the signal processing means is responsive to a signal from the monitoring means being indicative of a reduction in the diameter of the bale being greater than the predefined diameter reduction within the predefined period from the commencement of dispensing of wrapping material into the bale forming chamber for producing the signal indicative of correct circumferential wrapping of the bale.

In another aspect of the invention the signal processing means is responsive to a signal from the monitoring means being indicative of a change in the rate of reduction of the diameter of the bale, which is indicative of the change in the rate of reduction in the radial outward pressure being exerted by the bale in the bale forming chamber, for producing the signal indicative of correct circumferential wrapping of the bale.

Advantageously, the signal processing means is responsive to a signal from the monitoring means being indicative of a change in the rate of reduction of the diameter of the bale being greater than a predefined change in the rate of reduction of the diameter, which is indicative of the change in the rate of reduction in the radial outward pressure exerted by the bale in the bale forming chamber being greater than the predefined change in the rate of reduction of the radial outward pressure exerted by the bale, for producing the signal indicative of correct circumferential wrapping of the bale.

Preferably, the signal processing means is responsive to a signal from the monitoring means being indicative of a change in the rate of reduction of the diameter of the bale being greater than the predefined change in the rate of reduction of the diameter within a predefined period from commencement of dispensing of the wrapping material into the bale forming chamber for producing the signal indicative of correct circumferential wrapping of the bale.

In one aspect of the invention the dispensing means is adapted for dispensing wrapping material comprising sheet wrapping material for circumferential wrapping of the bale.

In another aspect of the invention the sheet wrapping material comprises plastics sheet wrapping material.

In a further aspect of the invention the sheet wrapping material comprises an adhesive coating on one major surface thereof.

In an alternative embodiment of the invention the dispensing means is adapted for dispensing wrapping material comprising net material for circumferential wrapping of the bale.

Preferably, the control means is adapted to control the dispenser to dispense a predefined amount of the wrapping material sufficient so that the bale is wrapped with a predefined number of turns of the wrapping material in response to the signal indicative of correct circumferential wrapping of the bale produced by the monitoring apparatus.

Advantageously, the baler comprises a fixed chamber baler, and each part of the housing comprises at least one bale rotating roller defining a portion of the circumferential periphery of the bale forming chamber.

Preferably, each part of the baler comprises a plurality of bale rotating rollers, the bale rotating rollers defining the circumferential periphery of the bale forming chamber.

Preferably, the baler is adapted for forming a bale of fodder material.

In one aspect of the invention the predefined period from the commencement of dispensing of wrapping material into the bale forming chamber comprises a period greater than the time required for one complete revolution of the bale in the bale forming chamber.

Preferably, the predefined period from the commencement of dispensing of wrapping material into the bale forming chamber comprises a period greater than the time required for one and a half revolutions of the bale in the bale forming chamber.

Advantageously, the predefined period from the commencement of dispensing of wrapping material into the bale forming chamber comprises a period greater than the time required for two complete revolutions of the bale in the bale forming chamber.

Ideally, the predefined period from the commencement of dispensing of wrapping material into the bale forming chamber comprises a period not greater than the time required for two and a quarter revolutions of the bale in the bale forming chamber.

The advantages of the invention are many. A particularly important advantage of the invention is that the provision of the monitoring apparatus prevents a bale being discharged from the bale forming chamber of a baler without the bale being properly circumferentially wrapped. A control means of a baler which controls the operation of the baler on failing to receive a signal from the monitoring apparatus indicative of correct circumferential wrapping of the bale in the bale forming chamber, or failing to receive the signal indicative of correct circumferential wrapping of the bale in the bale forming chamber within a predefined time period from commencement of dispensing of wrapping material into the bale forming chamber can immediately deactivate the baler to firstly prevent further wrapping material being dispensed into the bale forming chamber, and secondly to prevent discharge of the formed bale from the bale forming chamber until corrective action has been taken and the bale is correctly circumferentially wrapped in the bale forming chamber. A further advantage of the invention is that downtime of a baler which would otherwise result if the bale forming chamber were opened to discharge a circumferentially unwrapped bale is avoided.

A particularly important advantage of the invention is achieved when the baler forms a part of a combination of a baler and a baler wrapper, due to the fact that downtime of the combination baler/bale wrapper is minimised by avoiding a circumferentially unwrapped bale being discharged from the baler onto the bale wrapper. Discharge of a circumferentially unwrapped bale onto a bale wrapper results in significant downtime, since not only is it necessary to remove the wrapping material and material of the unwrapped bale from the bale forming chamber but most importantly, the majority of the material of the unwrapped bale is loosely discharged onto the bale wrapper, and this material must also be removed from the bale wrapper, and the bale wrapper must then be cleaned. This results in significant downtime.

The invention will be more clearly understood from the following description of some preferred embodiments thereof, which are given by way of example only, with reference to the accompanying drawings, in which:
Fig. 1 is a side elevational view of a baler according to the invention for forming a circumferentially wrapped cylindrical bale,
Fig. 2 is a side elevational view similar to Fig. 1 of the baler of Fig. 1 in a different state to that of Fig. 1,
Fig. 3 is a cross-sectional side elevational view of the baler of Fig. 1,
Fig. 4 is a block representation of a control circuit of the baler of Fig. 1,
Fig. 5 illustrates graphs of hydraulic pressure of the baler 1 during operation of the baler 1,
Fig. 6 is a side elevational view of a baler according to another embodiment of the invention for forming and circumferentially wrapping a bale,
Fig. 7 is a cross-sectional side elevational view of the baler of Fig. 6,
Fig. 8 is a side elevational view of the baler of Fig. 6 illustrating portions of the baler in different states to those of Figs. 5 and 6,
Fig. 9 is a side elevational view of the portion of the baler of Fig. 6,
Fig. 10 is a side elevational view of the portion of Fig. 9 showing a detail of the portion in a different position to that of Fig. 9,
Fig. 11 is a cross-sectional top plan view of a detail of the baler of Fig. 6,
Fig. 12 is a block representation of a control circuit of the baler of Fig. 6,
Fig. 13 is a side elevational view of a baler according to another embodiment of the invention,
Fig. 14 is a view similar to that of Fig. 13 with a portion of the baler of Fig. 13 in a different state to that of Fig. 13,
Fig. 15 is a view similar to Fig. 13 illustrating the portion of the baler in a still further different state,
Fig. 16 is a plan view of a detail of the baler of Fig. 13, and
Fig. 17 is a block representation of a control circuit of the baler of Fig. 13.

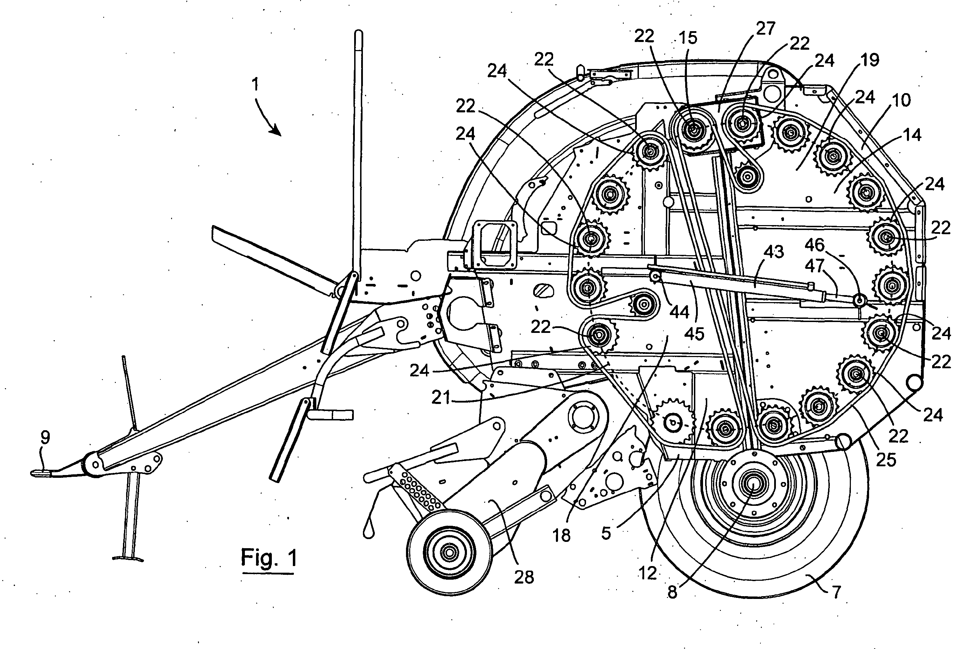

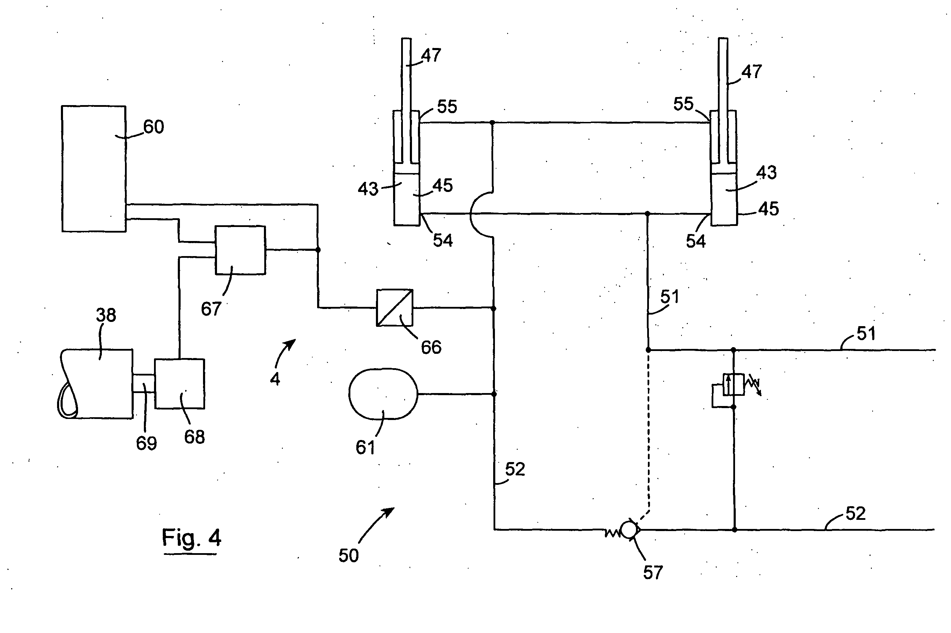

Referring to the drawings and initially to Figs. 1 to 5, there is illustrated a baler according to the invention, indicated generally by the reference numeral 1, for forming material, which in this embodiment of the invention is forage material, such as silage, hay, straw and the like into a cylindrical bale 2, and for circumferentially wrapping the bale 2 with wrapping material prior to discharge of the bale from the baler 1. Monitoring apparatus also according to the invention, indicated generally by the reference numeral 4, for detecting correct circumferential wrapping of the bale 2 is also provided, and is described in detail below with reference to Fig. 4. The wrapping material in this embodiment of the invention comprises wrapping film 3 of plastics material of the type which is commonly used in agricultural bale wrappers and is coated with an adhesive coating on one surface thereof. However, the wrapping material may be any suitable wrapping material, for example, net material and the like.

In this embodiment of the invention the baler 1 comprises a chassis 5 which is carried on a pair of rotatably mounted ground engaging wheels 7 which are rotatably carried on an axle 8 extending the width of the chassis 5 and secured thereto. A hitch 9 extends from the chassis 5 for hitching the baler 1 to a tractor (not shown) or other prime mover, for example, a hitch point of a tractor so that the baler 1 may be towed by the tractor and may be powered by the power take-off shaft of the tractor, and also, if desired, by an hydraulic system of the tractor.

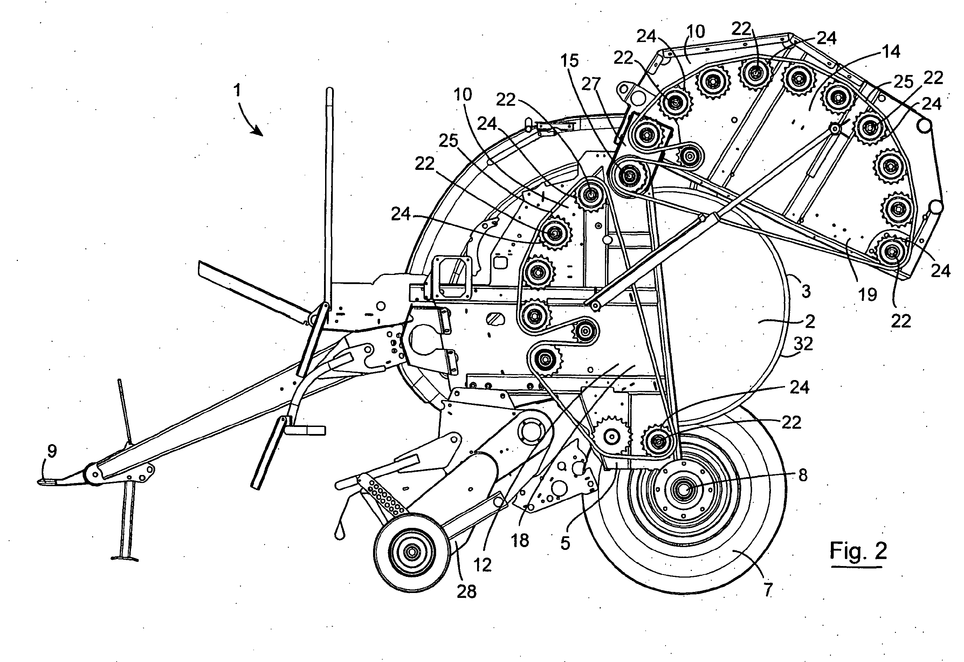

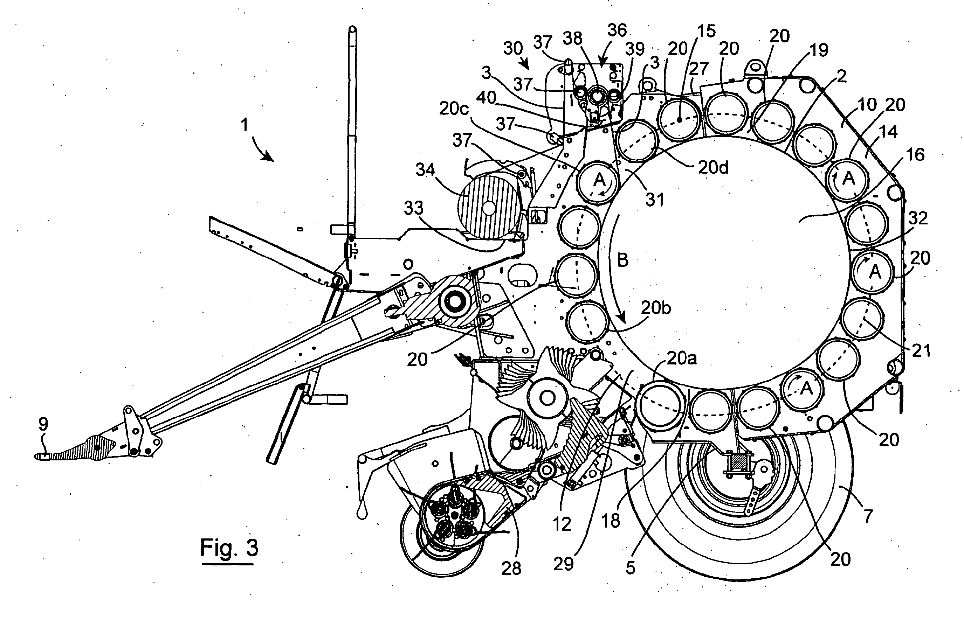

The baler 1 comprises a housing 10 which is mounted on the chassis 5 and comprises a stationary part 12 which is rigidly mounted on the chassis 5, and a moveable part 14 which is pivotally connected to the stationary part 12 about a pivot axis 15. The stationary part 12 and the moveable part 14 together form a bale forming chamber 16 within which the bale 2 is formed and wrapped, see Fig. 3. The moveable part 14 is pivotal about the pivot axis 15 between a bale forming state illustrated in Figs. 1 and 3 forming with the stationary part 12 the bale forming chamber 16, and a discharge state illustrated in Fig. 2 for providing access to the bale forming chamber 16 for accommodating discharge of a formed and wrapped bale from the bale forming chamber 16.

In this embodiment of the invention the baler 1 is a fixed chamber baler, and the stationary part 12 comprises a pair of spaced apart side walls 18 and the moveable part 14 comprises a pair of spaced apart side walls 19. The side walls 18 and 19 define opposite ends of the bale forming chamber 16. A plurality of bale rotating rollers 20 extend between opposite ones of the side walls 18 and 19 and are rotatably carried in the side walls 18 and 19 of the stationary and moveable parts 12 and 14 of the housing 10 on a pitch circle 21, and together the bale rotating rollers 20 define the circumferential periphery of the bale forming chamber 16 when the moveable part 14 of the housing 10 is in the bale forming state, see Fig. 3. The bale rotating rollers 20 are rigidly mounted on respective shafts 22 which are rotatably mounted in bearings (not shown) in the side walls 18 and 19 of the stationary and moveable parts 12 and 14 on the pitch circle 21. Sprockets 24 fast on the shafts 22 of the bale rotating rollers 20 are driven by transmission chains 25, illustrated diagrammatically in Figs. 1 and 2 for rotating the bale rotating rollers 20 in the direction of the arrows A for in turn rotating the forage material in the bale forming chamber 16 in the direction of the arrow B to form the forage material into the bale 2.

A pair of mounting brackets 27 extending from the side walls 19 of the moveable part 14 pivotally engage a corresponding one of the shafts 22 of the adjacent bale rotating roller 20 in the stationary part 12 for pivoting of the moveable part 14 relative to the stationary part 12 about the pivot axis 15 between the bale forming state and the discharge state. In this embodiment of the invention the stationary part 12 and the moveable part 14 each define approximately 180° of the circumferential periphery of the bale forming chamber 16, so that when the moveable part 14 of the housing 10 is pivoted into the discharge state, the formed and wrapped bale 2 is accommodated from the bale forming chamber 16 under gravity.

A pick-up mechanism 28 extends forwardly and downwardly from the chassis 5 for picking up forage material from the ground and for delivering the forage material into the bale forming chamber 16 through an inlet opening 29 which is defined between a pair of the bale rotating rollers 20 in the stationary part 12 of the housing 10, namely, between the bale rotating rollers 20a and 20b, see Fig. 3.

A wrapping material dispensing means comprising a wrapping material dispensing mechanism 30 is mounted on the chassis 5 forwardly of the housing 10 for dispensing the wrapping film 3 into the bale forming chamber 16 through a wrapping material inlet 31 defined between a pair of the bale rotating rollers 20, namely, between the bale rotating rollers 20c and 20d for wrapping the bale 2 about the circumferential surface 32 thereof for binding the bale 2 together prior to discharge from the bale forming chamber 16. The wrapping material dispensing mechanism 30 comprises a cradle 33 mounted on a forward part of the stationary part 12 of the housing 10 within which a roll 34 of the wrapping film 3 is rotatably carried.

Wrapping film 3 is drawn from the roll 34 over guide rollers 37 by a feeding mechanism 36 which is mounted on the stationary part 12 of the housing 10 above the wrapping film inlet 31.

A feed roller 38 co-operating with a pinch roller 39 both located in the feeding mechanism 36, when the bale 2 has been formed to the desired size, initially feeds the wrapping film 3 into the bale forming chamber 16 until the wrapping film 3 is engaged between the formed bale 2 and the bale rotating roller 20c. Once the wrapping film 3 is engaged between the rotating formed bale 2 and the bale rotating roller 20c, the radial outward pressure exerted by the formed rotating bale 2 on the bale rotating rollers 20 results in the wrapping film 3 being drawn between the bale 2 and the bale rotating roller 20c, and then sequentially between the bale 2 and subsequent ones of the bale rotating rollers 20 circumferentially around the bale 2 for wrapping thereof. The feed roller 38 is configurable to also act as a tensioning roller, so that once the wrapping film 3 is being drawn onto the bale 2 by the action of the rotating bale 2 and the bale forming rollers 20, the feed roller 38 and the pinch roller 39 co-operate to tension the wrapping film 3 as it is being drawn between the feed roller 38 and the pinch roller 39, so that the wrapping film 3 is circumferentially wrapped around the bale 2 with an appropriate degree of tension induced in the wrapping film 3 in order to tightly circumferentially wrap the formed bale 2 in the bale forming chamber 16. The feed roller 38 is driven by a drive transmission (not shown) taken from one of the sprockets 24 of the bale rotating rollers 20 through a one-way slipping clutch (not shown). A tensioning mechanism (not shown) is coupled to the feed roller 38. The tensioning mechanism and the one-way slipping clutch are configured so that drive is transmitted by the drive transmission (not shown) through the one-way slipping clutch for initially feeding the wrapping film 3 into the bale forming chamber 16, and then when the wrapping film is being drawn around the bale 2 by the clamping action between the rotating bale 2 and the bale forming rollers 20, the clutch slips, and the tensioning mechanism (not shown) applies a resistance to rotation of the feed roller 38, in order to induce the appropriate degree of tension in the wrapping film 3 being drawn into the bale forming chamber 16 and being circumferentially wrapped onto the rotating bale 2.

A cut and hold mechanism 40 located beneath the feed and pinch rollers 38 and 39 and between the wrapping film inlet 31 and the feed and pinch rollers 38 and 39 severs the wrapping film 3 which has been wrapped onto the bale 2 in the bale forming chamber 16 from the wrapping film 3 held between the feed and pinch rollers 38 and 39.

Such wrapping dispensing mechanisms for feeding, dispensing and tensioning wrapping film, and such a cut and hold mechanism will be well known to those skilled in the art, and further description should not be required.

An urging means for urging the moveable part 14 of the housing 10 relative to the stationary part 12 between the bale forming state and the discharge state and for retaining the moveable part 14 in the bale forming state during forming and wrapping of the bale 2, comprises a pair of double acting hydraulic rams 43 mounted on opposite sides of the housing 10 and acting between the stationary part 12 and the moveable part 12. Pivot mountings 44 pivotally couple cylinders 45 of the hydraulic rams 43 to the corresponding side walls 18 of the stationary part 12. Pivot mountings 46 pivotally couple piston rods 47 of the hydraulic rams 43 to the corresponding moveable side walls 19 of the moveable part 14. During formation and wrapping of the bale 2 in the bale forming chamber 16 the hydraulic rams 43 apply sufficient force acting between the stationary and moveable parts 12 and 14 of the housing 10 in order to retain the stationary and moveable parts 12 and 14 substantially together in the bale forming state forming the bale forming chamber 16, against the radial outward pressure exerted by the formed bale 2 in the bale forming chamber 16 on the bale rotating rollers 20 which would otherwise act to urge the moveable part 14 from the bale forming state.

Referring now in particular to Fig. 4, an hydraulic circuit 50 for controlling operation of the hydraulic rams 43 for operating the moveable part 14 between the bale forming state and the discharge state, and for retaining the moveable part 14 in the bale forming state comprises two hydraulic lines, namely, a first hydraulic line 51 and a second hydraulic line 52, which act as both supply and return lines for supplying and returning hydraulic fluid between an hydraulic fluid source (not shown) and respective first and second ports 54 and 55, respectively, of the hydraulic rams 43. The hydraulic fluid source (not shown) may be any suitable hydraulic fluid source, which will be well known to those skilled in the art, and may be derived from the hydraulic fluid system of the tractor, or may be a dedicated hydraulic fluid source of the baler 1. The hydraulic rams 43 are operated for urging the moveable part 14 of the housing 10 from the bale forming state to the discharge state by applying pressurised hydraulic fluid to the first ports 54 of the hydraulic rams 43 through the first hydraulic line 51, to extend the piston rods 47 outwardly of the cylinders 45 of the hydraulic rams 43. During extension of the piston rods 47 from the cylinders 45 of the hydraulic rams 43, hydraulic fluid is returned through the second ports 55 and the second hydraulic line 52 from the hydraulic rams 43 to the hydraulic fluid source (not shown). Hydraulic fluid is delivered through the second hydraulic lines 52 through the second ports 55 of the hydraulic rams 43 for retracting the piston rods 47 into the cylinders 45 of the hydraulic rams 43 for urging the moveable part 14 of the housing 10 from the discharge state into the bale forming state, and for retaining the moveable part 14 in the bale forming state against the radial outward pressure exerted by the formed bale on the bale rotating rollers 20 of the housing 10 during forming and wrapping of the bale 2. During retraction of the piston rods 47 into the cylinders 45 of the hydraulic rams 43, hydraulic fluid is returned through the first ports 54 and the first hydraulic line 51 from the hydraulic rams 43 to the hydraulic fluid source (not shown).

A bi-state check valve 57 is located in the second hydraulic line 52 and is operable in a first state preventing return of hydraulic fluid through the second hydraulic line 52 from the hydraulic rams 43 in response to low pressure in the first hydraulic line 51, and is operable in a second state for permitting return of hydraulic fluid from the hydraulic rams 43 through the second hydraulic line 52 in response to high pressure in the first hydraulic line 51. Accordingly, the check valve 57 is operated in the non-return first state preventing return of hydraulic fluid through the second hydraulic line 52 from the hydraulic rams 43 while hydraulic fluid is being delivered to the hydraulic rams 43 for operating the moveable part 14 of the housing 10 from the discharge state to the bale forming state and while the moveable part 14 of the housing 10 is being retained in the bale forming state by the hydraulic rams 43 with the pressure of the hydraulic fluid at a desired hydraulic pressure for retaining the moveable part 14 in the bale forming state against the radial outward pressure exerted by the formed bale in the bale forming chamber 16. The bi-state check valve 57 is retained in the non-return first state by the low pressure in the first hydraulic line 51 until wrapping of the bale in the bale forming chamber 16 has been completed. At which stage the hydraulic circuit 50 is operated to operate the hydraulic rams 43 for urging the moveable part 14 of the housing 10 into the discharge state for discharging the wrapped bale 2 from the bale forming chamber 16. The high pressure hydraulic fluid in the first hydraulic line 51 operates the check valve 57 from the non-return first state, to the second state permitting return of hydraulic fluid through the second hydraulic line 52 from the hydraulic rams 43.

A control means, namely, a microcontroller 60 controls the entire operation of the baler 1, including the supply and return of hydraulic fluid through the first and second hydraulic lines 51 and 52 to the hydraulic rams 43 for operating the moveable part 14 of the housing 10 between the bale forming state and the discharge state, and also for retaining the moveable part 14 in the bale forming state. The control of such balers by a microcontroller will be well known to those skilled in the art, and further description will not be given.

A pressure accumulator 61 located in the second hydraulic line 52 between the hydraulic rams 43 and the check valve 57 accommodates hydraulic fluid and buffers the hydraulic fluid between the hydraulic rams 43 and the check valve 57 in response to variation in the radial outward pressure being exerted by the bale 2 in the bale forming chamber 16 on the moveable part 14 of the housing 10 when the check valve 57 is in the non-return first state.

The monitoring apparatus 4 for detecting correct circumferential wrapping of the bale 2 in the bale forming chamber 16 comprises a monitoring means for monitoring a characteristic indicative of the radial outward pressure exerted by the bale 2 in the bale forming chamber 16, which in this embodiment of the invention comprises a pressure transducer 66 for monitoring pressure of the hydraulic fluid in the second hydraulic line 52 between the hydraulic rams 43 and the check valve 57. The pressure in the second hydraulic line 52 between the hydraulic rams 43 and the check valve 57, when the hydraulic circuit 50 is operated for retaining the moveable part 14 of the housing 10 in the bale forming state with the check valve 57 in the non-return first state, is similar to the pressure of the hydraulic fluid in the hydraulic rams 43, and is proportional to the radial outward pressure being exerted by the bale 2 on the bale rotating rollers 20 of the bale forming chamber 16, and is thus a characteristic indicative of the radial outward pressure being exerted by the bale 2 in the bale forming chamber 16.

The monitoring apparatus 4 also comprises a signal processing means, namely, a signal processor 67 which reads signals from the pressure transducer 66, which are indicative of the pressure of the hydraulic fluid in the hydraulic rams 43 acting to retain the moveable part 14 of the housing 10 in the bale forming state, and which are thus indicative of the radial outward pressure being exerted by the bale 2 in the bale forming chamber 16 on the bale forming rollers 20, and in turn on the moveable part 14 of the housing 10. The signal processor 67 is programmed to process the signals read from the pressure transducer 66 for determining if the bale 2 is being correctly circumferentially wrapped in the bale forming chamber 16 as will now be described.

In the operation of the baler 1, when a wrapped formed bale has been discharged from the bale forming chamber 16, the hydraulic circuit 50 is operated under the control of the microcontroller 60 for urging the moveable part 14 of the housing 10 into the bale forming state, so that the bale forming chamber 16 is defined by the moveable and stationary parts 14 and 12, respectively, of the housing 10. The hydraulic circuit 50 is operated for pressurising the hydraulic rams 43 so that the pressure in the hydraulic rams 43 and in the accumulator 61 and the portion of the second hydraulic line 52 between the hydraulic rams 43 and the check valve 57 is at a predefined pressure, which is sufficient for maintaining the moveable part 14 and the stationary part 12 of the housing 10 substantially together during formation and wrapping of a bale 2 in the bale forming chamber 16 against the radial outward pressure being exerted by the bale 2 on the bale rotating rollers 20 which acts in a direction which would otherwise urge the moveable part 14 of the housing 10 from the stationary part 12. The check valve 57 being in the non-return first state during the period while the bale is being formed in the bale forming chamber 16 and during the period while the formed bale is being circumferentially wrapped in the bale forming chamber 16, maintains the pressure of the hydraulic fluid in the hydraulic rams 43, the accumulator 61 and the portion of the second hydraulic line 52 between the hydraulic rams 43 and the check valve 57 at the predefined pressure. In this embodiment of the invention, the predefined pressure at which the hydraulic fluid is maintained in the hydraulic rams 43 during formation of the bale and circumferentially wrapping thereof is approximately 125Bar, and which in turn produces an urging force from each hydraulic ram 43 of the order of 10,000 Newtons, so that the total urging force with which the stationary and moveable parts 12 and 14 of the housing 10 are held together in the bale forming state by the two hydraulic rams 43 is in the order of 20,000 Newtons.

It has been found that a formed bale 2 in the bale forming chamber 16 exerts its maximum radial outward pressure on the bale rotating rollers 20 when the bale has been formed to its desired size. This maximum radial outward pressure tends to urge the moveable part 14 of the housing 10 away from the stationary part 12 thereof. Since the hydraulic fluid in the hydraulic rams 43 must act against this radial outward pressure which is exerted by the formed bale 2 on the bale rotating rollers 20, and since the check valve 57 is in the non-return first state the pressure of the hydraulic fluid in the hydraulic rams 43 is proportional to the radial outward pressure of the formed bale 2 on the bale rotating rollers 20. Accordingly, the pressure of the hydraulic fluid in the second hydraulic line 52 which is monitored by the pressure transducer 66 is proportional to the radial outward pressure being exerted by the formed bale 2 in the bale forming chamber 16 on the bale rotating rollers 20 when the check valve 57 is in the non-return first state.

It has been found that on the formed bale 2 in the bale forming chamber 16 being circumferentially wrapped with the wrapping film 3, due to the tension in the wrapping film 3 being wrapped onto the circumferential surface 32 of the bale 2, the material of the bale 2 adjacent the circumferential surface 32 thereof is further compacted. This compacting of the material in the formed bale 2 results in slight reducing the diameter of the bale 2, once the bale 2 has been wrapped with more than one complete turn of the wrapping film 3. It has been found that this slight reduction in the diameter of the partly wrapped bale results in a reduction in the radial outward pressure being exerted by the bale 2 on the bale rotating rollers 20. This reduction in the radial outward pressure exerted by the partially wrapped bale 2 being exerted on the bale rotating rollers 20 results in a proportional reduction in the pressure of the hydraulic fluid in the hydraulic rams 43 which is being monitored by the pressure transducer 66.

Further, it has been found that once the bale has been formed to the desired diameter, and when no further material is fed into the bale forming chamber, further rotating of the bale 2 in the bale forming chamber 16 prior to circumferential wrapping of the bale 3 in the bale forming chamber 16 results in the material adjacent the circumferential surface of the bale 2 being further compacted, and this leads also to a slight reduction in the radial outward pressure being exerted by the formed bale 2 on the bale rotating rollers 20. However, once the formed bale 2 has been wrapped with more than one complete turn of the wrapping film 3, it has been found that the reduction in the radial outward pressure being exerted by the bale on the bale rotating rollers 20 is significantly greater than the reduction in the radial outward pressure being exerted by the bale resulting from merely rotating the bale 2 in the bale forming chamber 16. This significantly greater reduction in the radial outward pressure being exerted by the bale 6 on the bale forming rollers 20 which results from wrapping of the bale is made use of in order to detect correct circumferential wrapping of the bale 2.

In this embodiment of the invention the signal processor 67 is programmed to detect the reduction in the pressure of the hydraulic fluid being monitored by the pressure transducer 66 which is greater than a predefined fluid pressure drop, which corresponds to a predefined pressure drop in the radial outward pressure exerted by the bale in the bale forming chamber which is indicative of correct circumferential wrapping of the bale 2 in the bale forming chamber 16. When the pressure drop in the hydraulic fluid in the hydraulic rams 43 being monitored by the pressure transducer 66 is greater than the predefined fluid pressure drop, the signal processor 67 produces the signal indicative of correct circumferential wrapping of the bale.

However, the'signal processor 67 is also programmed so that if within a predefined period from the commencement of dispensing of wrapping film 3 into the bale forming chamber 16, the pressure drop in the hydraulic fluid in the hydraulic rams 43 being monitored by the pressure transducer 66 is not greater than the predefined fluid pressure drop, in other words, the pressure drop in the monitored pressure is not such as to be indicative of correct circumferential wrapping of the bale, the signal processor 67 outputs a signal indicative of failure of correct circumferential wrapping of the bale 2 in the bale forming chamber 16. The predefined period is selected to be a time period which corresponds to the time which it takes from the commencement of dispensing of the wrapping film 3 into the bale forming chamber 16 for the formed bale 2 to have been wrapped with approximately two and a quarter turns of the wrapping film 3, which corresponds to approximately two and a half revolutions of the bale 2 in the bale forming chamber 16. It has been found that if the signals read from the pressure transducer 66 are not indicative of a pressure drop in the pressure of the hydraulic fluid in the hydraulic rams 43 being greater than the predefined fluid pressure drop within the predefined period from commencement of dispensing of the wrapping film 3 into the bale forming chamber 16, the bale 2 is not being correctly circumferentially wrapped. This would typically be as a result of the wrapping film 3 having become entangled with or wrapped around one of the bale rotating rollers 20.

A rotary encoder 68 illustrated in block representation in Fig. 4 located on a shaft 69 of the feed roller 38 produces signals which are indicative of the length of the wrapping film 3 being drawn into the bale form chamber 16. The signals from the rotary encoder 68 are read by the signal processor 67 from commencement of dispensing of the wrapping film 3 into the bale forming chamber 16. The signal processor 67 determines that the predefined period from the commencement of dispensing of the wrapping film 3 into the bale forming chamber 16 has expired when the signals read from the rotary encoder 68 are indicative of the length of the wrapping film 3 dispensed into the bale forming chamber 16 being sufficient to wrap the bale 2 with approximately two and a quarter turns of the wrapping film 3. The microcontroller 60 also reads the signals from the pressure transducer 66 in order to determine when the radial outward pressure being exerted by the bale on the bale rotating rollers 20 corresponds to a predefined pressure which is indicative of the bale having been formed to the desired size. Although, the microcontroller 60 may read signals from other sensors (not shown) which would also be indicative of the bale 2 having been formed to the desired size. The detection of the bale having been formed to the desired size from signals read from other such sensors will be well know to those skilled in the art.

The microcontroller 60 is programmed to read the signals produced by the signal processor 67 once dispensing of wrapping film 3 into the bale forming chamber 16 commences, and on determining that the signal produced by the signal processor 67 is a signal indicative of correct circumferential wrapping of the bale, the microcontroller 60 controls the operation of the baler 1 to complete circumferential wrapping of the formed bale 2 in the bale forming chamber 16. On the other hand, if the microcontroller 60 detects that the signal produced by the signal processor 67 is indicative of failure of correct circumferential wrapping of the bale, the microcontroller 60 is programmed to immediately terminate wrapping of the bale 2 and activate an alarm which may be an aural or a visual alarm, so that corrective action can be taken. The corrective action may require removing wrapping film 3 already dispensed into the bale forming chamber 16 from the bale forming chamber 16, and recommencing circumferential wrapping of the bale 2 in the bale forming chamber 16, or other appropriate corrective action.

In use, with the baler 1 hitched to a tractor or other suitable prime mover, the baler 1 is towed over a field along a windrow of the forage material, and the pick-up mechanism 28 feeds the forage material into the bale forming chamber 16 where the bale rotating rollers 20 rotate the forage material in the direction of the arrow B to commence forming and rotating of the bale 2. On the bale 2 being formed to the desired size, the pick-up mechanism 28 is disabled, and the feed roller 38 is operated to feed the wrapping film 3 between the feed roller 38 and the pinch roller 39 into the bale forming chamber 16 through the wrapping film inlet 31. As the wrapping film 3 is engaged between the rotating bale 2 and the bale rotating roller 20c, the clamping action between the rotating bale 2 and the bale rotating roller 20c, and in turn the other bale forming rollers 20, results in the wrapping film 3 being drawn into the bale forming chamber 16 and circumferentially wrapped around the bale 2.

On commencement of dispensing of the wrapping film 3 into the bale forming chamber 16, the signal processor 67 commences to read and count signals from the rotary encoder 68 to time the predefined period from the commencement of dispensing of the wrapping film 3 into the bale forming chamber 16. The signal processor 67 also commences to read signals produced by the pressure transducer 66 which are indicative of the pressure in the hydraulic fluid in the hydraulic rams 43 acting against the radial outward pressure being exerted by the bale 2 on the bale rotating rollers 20. On the signals read from the pressure transducer 66 being indicative of the pressure drop in the hydraulic fluid in the hydraulic rams 43 being greater than the predefined fluid pressure drop, the signal processor 67 produces the signal indicative of correct circumferential wrapping of the bale 2. The microcontroller 60 on detecting the signal indicative of correct circumferential wrapping of the bale 2 produced by the signal processor 67 allows the circumferential wrapping of the bale 2 in the bale forming chamber 16 to be completed. On completion of circumferential wrapping of the bale 2 in the bale forming chamber 16, the microcontroller 60 operates the hydraulic circuit 50 to operate the hydraulic rams 43 for urging the moveable part 14 of the housing 10 from the bale forming state to the discharge state for discharging the circumferentially wrapped formed bale 2 from the bale forming chamber 16.

On the other hand, if within the predefined period from the commencement of dispensing of the wrapping film 3 into the bale forming chamber 16, the signals read from the pressure transducer 66 are not indicative of the pressure drop in the hydraulic fluid in the hydraulic rams 43 being greater than the predefined fluid pressure drop, the signal processor 67 determines that the bale 2 in the bale forming chamber 16 is not being correctly circumferentially wrapped, and produces the signal indicative of failure of correct circumferential wrapping of the bale 2 in the bale forming chamber 16. On detecting the signal indicative of failure of correct circumferential wrapping of the bale from the signal processor 67, the microcontroller 60 immediately terminates wrapping of the bale 2 in the bale forming chamber 16, and activates the alarm.

The predefined pressure drop in the radial outward pressure being exerted by the bale 2 in the bale forming chamber 16 which would be indicative of a bale being correctly wrapped after a predefined period corresponding to the time period required to wrap the bale with two and a quarter turns of wrapping film 3 will vary depending on a number of factors, such as the type of baler, the material being baled, the maximum radial outward pressure being exerted by the bale when the bale is determined as having been formed to the desired size. Therefore, the value of the predefined fluid pressure drop in the hydraulic fluid in the hydraulic rams 43 will similarly be dependent on these factors. Accordingly, the value of the predefined fluid pressure drop in the pressure in the hydraulic fluid monitored by the pressure transducer 66 which would correspond to the predefined pressure drop in the radial outward pressure being exerted by the bale 2 in the bale forming chamber 16 which would be indicative of correct circumferential wrapping of the bale 2 in the bale forming chamber 16 will be determined for each type of baler and for each type of material to be baled, and will also be determined for each size of bale.

In general, the value of predefined fluid pressure drop in the pressure of the hydraulic fluid in the hydraulic rams 43 being monitored by the pressure transducer 66 will be determined initially by trial and error for each of the parameters, namely, the type of baler, the type of material to be baled and the size of the bale. The values of the predefined fluid pressure drops for the different materials and for different sizes of bales of the different materials will be stored in a suitable memory in the signal processor 67, and cross-reference with the materials and bale sizes.

The baler 1 will be provided with a suitable input interface, for example, a keypad or other such suitable input interface in order to allow data identifying the material to be baled and the size of the bales to be formed to be inputted into the signal processor 67. From the inputted data the signal processor 67 will then select the appropriate value of the predefined fluid pressure drop with which the signals read from the pressure transducer 66 are to be compared for determining correct circumferential wrapping of the bale.

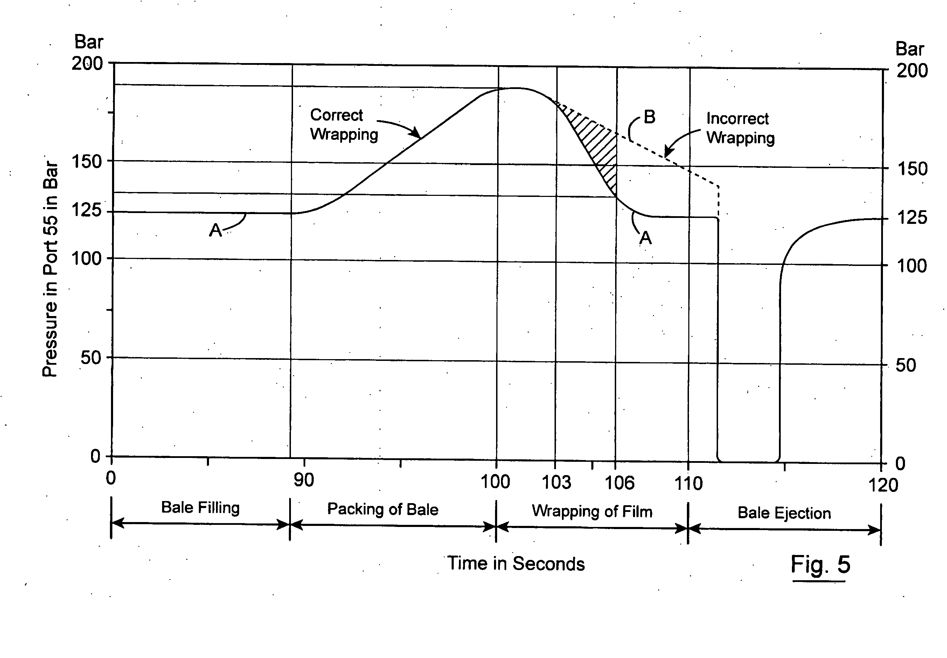

Referred now in particular to Fig. 5, a graph is illustrated which shows the value of the pressure in the hydraulic fluid in the hydraulic rams 43 read from the pressure transducer 66 while the check valve 57 is in the non-return first state and the hydraulic rams 43 are operated for retaining the moveable part 14 of the housing 10 in the bale forming state with the moveable part 14 forming with the stationary part 12 the bale forming chamber 16 in the baler 1 according to the invention. The graph A represented by a continuous line represents the values of the pressure in the hydraulic fluid in the hydraulic rams 43 which is read from the pressure transducer 66 during forming of a bale 2 in the bale forming chamber 16 and during correct circumferential wrapping of the bale 2. The graph B which is illustrated by a broken line represents the value of the pressure in the hydraulic fluid in the hydraulic rams 43 which is read from the pressure transducer 66 during wrapping of a bale 6 when the bale 2 is being incorrectly circumferentially wrapped.

In this particular example, the two hydraulic rams 43 each have a piston of diameter of 45mm. The diameter of the respective piston rods is 32mm. The hydraulic rams 43 are pressurised to a pressure of 125Bar for retaining the moveable part 14 of the housing 10 in the bale forming state to form with the stationary part 12 the bale forming chamber 16 during formation of the bale and circumferential wrapping of the bale in the bale forming chamber 16. During this entire period while the hydraulic rams 43 are pressurised to the pressure of 125Bar for retaining the moveable part 14 of the housing 10 in the bale forming state, the check valve 57 is operated in the non-return first state, thereby preventing return of hydraulic fluid from the hydraulic rams 43 through the second line 52. As discussed above, the urging force exerted by the two hydraulic rams 43 for retaining the moveable part 14 of the housing 10 in the bale forming state, when the hydraulic fluid is pressurised to 125B is approximately 20,000 Newtons.

Initially during the first approximately ninety seconds of operation of the baler 1 in the formation of a bale, material to be baled is delivered into the bale forming chamber 16 by the pick-up mechanism 28, and during this period the pressure in the hydraulic fluid in the hydraulic rams 43 read from the pressure transducer 66 remains constant at 125Bar. However, as the bale is approaching being fully formed from approximately ninety seconds onwards, the diameter of the bale begins to increase, and thus the bale commences to exert a radial outward pressure on the bale forming rollers 20, which in turn tends to act to urge the moveable part 14 of the housing 10 away from the stationary part 12. This radial outward pressure by the bale is resisted by the hydraulic rams 43, which in turn leads to an increase in the hydraulic pressure in the hydraulic rams 43 being read from the pressure transducer 66, since the check valve 57 is in the non-return first state.

The increase in the pressure read from the pressure transducer 66 commences from approximately ninety seconds, and continues to steadily increase until the bale has been formed to the desired size. In this embodiment of the invention, it has been determined that when the pressure being monitored by the pressure transducer 66 reaches a predefined pressure value of approximately 190Bar, the bale has been formed to the desired size. In this case, the pressure being read from the pressure transducer 66 reaches the predefined pressure value of 190Bar at approximately one hundred seconds. At this time, the pick-up mechanism 28 is disabled and dispensing of the wrapping film 3 is commenced. The signal processor 67 commences to read the signals from the pressure transducer 66 and also from the encoder 68 for timing the predefined period from commencement of dispensing of the wrapping film 3. In this particular case, the predefined period during which approximately two and a quarter turns of the wrapping film 3 is dispensing into the bale forming chamber 16 is approximately six seconds.

During this six second predefined period, the signal processor 67 reads the signals from the pressure transducer 66, and computes the pressure drop in the hydraulic fluid in the hydraulic rams 43 from the commencement of dispensing of the wrapping film 3. The computed pressure drop is compared with the appropriate stored predefined fluid pressure drop which corresponds with the predefined reduction in the radial outward pressure exerted by the bale in the bale forming chamber which is indicative of correct circumferential wrapping of the bale. In this embodiment of the invention, the value of the predefined fluid pressure drop for the material being baled, which in this embodiment of the invention is silage, is set at 38Bar, which is approximately 20% of the predefined pressure of 190Bar. It has been found that in this embodiment of the invention, when the material of the bale is silage, once the pressure drop in the hydraulic fluid monitored by the pressure transducer 66 has reached 38Bar from the predefined pressure of 190Bar, the bale is being correctly wrapped. As can be seen from graph A, the predefined fluid pressure drop is reached after approximately five seconds from the commencement of dispensing of the wrapping film 3 into the bale forming chamber 16. At that stage the signal indicative of correct circumferential wrapping of the bale is produced by the signal processor 67. Additionally, as can be seen from graph A, at the end of the predefined period at time one hundred and six seconds, the pressure read from the pressure transducer 66 was approximately 132Bar, which represents a pressure drop of 58Bar in the pressure in the hydraulic fluid in the hydraulic rams 43 being monitored by the pressure transducer 66 from the predefined maximum pressure of 190Bar, thus clearly indicating correct circumferential wrapping of the bale 2 at the end of the predefined period.

However, from graph B which represents signals read from the pressure transducer 66 when incorrect circumferential wrapping of a bale was detected, in other words, when circumferential wrapping of the bale failed, the pressure read from the pressure sensor 66 at the end of the predefined period at time one hundred and six seconds was approximately 173Bar, which represented a pressure drop of only 17Bar from the predefined pressure of 190Bar.

In this embodiment of the invention this value of the pressure drop in the hydraulic fluid pressure of 17Bar corresponds with the maximum pressure drop which would occur in the radial outward pressure being exerted by the bale in the bale forming chamber over the predefined period in the absence of circumferential wrapping of the bale in the bale forming chamber. The value of the pressure drop in the hydraulic fluid pressure of 58Bar corresponds with the maximum pressure drop which would occur in the radial outward pressure exerted by the bale in the bale forming chamber over the predefined period resulting from correct circumferential wrapping of the bale.

Accordingly, the predefined fluid pressure drop for the pressure in the hydraulic fluid in the hydraulic rams 43 must be set at a value greater than 17Bar, and less than 58Bar, so that correct circumferential wrapping of the bale can be detected within the predefined period. The value of the pressure drop in the hydraulic fluid of 17Bar is approximately 9% of the predefined maximum pressure of 190Bar, while the pressure drop in the hydraulic fluid pressure of 58Bar is approximately 30% of the predefined maximum pressure of 190Bar. Thus, the predefined fluid pressure drop for the hydraulic fluid pressure in the hydraulic rams 43 must be set in this particular embodiment of the invention between approximately 10% and 28% of the predefined maximum pressure of 190Bar, in order to detect correct circumferential wrapping of the bale within the predefined period.

Typically, the predefined fluid pressure drop for the hydraulic fluid in the hydraulic rams 43 from the maximum predefined pressure would typically be set at a value in the range of 15% to 25% of the maximum predefined pressure of the hydraulic fluid in the hydraulic rams 43 which is indicative of the bale being formed to the desired size. In this embodiment of the invention, as discussed above, the predefined fluid pressure drop for the hydraulic fluid in the hydraulic rams 43 is set at 38Bar, which is approximately 20% of the maximum predefined pressure which is indicative of the bale having been formed to the desired size. However, it will be appreciated that these values may vary, as discussed above, depending on the type of material being baled and the size of the bale, as well as the type of the baler.

The remainder of graph A from the end of the predefined period at one hundred and six seconds to approximately time one hundred and twelve seconds represents the period during which circumferential wrapping of the bale continues until the bale has been circumferentially wrapped with the desired number of turns of the wrapping film 3, which may vary from three turns to eight turns, and typically, would be approximately four turns of the wrapping film 3. At time one hundred and ten seconds circumferential wrapping of the bale has been completed, and shortly after that at time one hundred and twelve seconds approximately, the hydraulic circuit 50 is configured to operate the hydraulic rams 43 to urge the moveable part 14 of the housing 10 from the bale forming state into the discharge state for discharging of the wrapped bale from the bale forming chamber.

A cycle of forming and wrapping a bale of silage with wrapping material provided by net material produces graphs substantially similar to graphs A and B which represent forming of the bale and correct and incorrect wrapping of the bale, respectively, with the exception that the dispensing of the net material into the bale forming chamber is delayed for approximately three seconds after the predefined pressure of 190Bar has been reached, and thus the predefined period runs from time one hundred and three seconds to one hundred and nine seconds.

It is also envisaged that correct circumferential wrapping of the bale 2 could be detected based on a change in the rate of reduction in the radial outward pressure being exerted by the bale 2 on the bale rotating rollers 20 instead of the reduction in the radial outward pressure being exerted by the bale 2 on the bale rotating rollers 20. In which case, correct circumferential wrapping of the bale would be determined when a change in the rate of reduction in the radial outward pressure being exerted by the bale 2 would be greater than a predefined value of change during the predefined period from the commencement of dispensing the wrapping film 3 into the bale forming chamber 16. In which case, the signal processor 67 would be programmed to read the signals from the pressure transducer 66 and once a change in the rate of reduction in the pressure of the hydraulic fluid being monitored by the pressure transducer 66 was greater than a predefined change value during the predetermined period from the commencement of dispensing of the wrapping film 3 into the bale forming chamber 16, the signal indicative of correct circumferential wrapping of the bale would be produced by the signal processor 67. If a change in the rate of reduction in the pressure being monitored by the pressure transducer 66 was not greater than the predefined change value within a predefined period from commencement of dispensing of the wrapping film 3 into the bale forming chamber 16, the signal processor 67 would produce the signal indicative of failure of correct circumferential wrapping of the bale. The predefined period from the commencement of dispensing of the wrapping film 3 into the bale forming chamber 16 would correspond to the time taken for the bale 2 to be circumferentially wrapped with two and a quarter turns of the wrapping film 3.

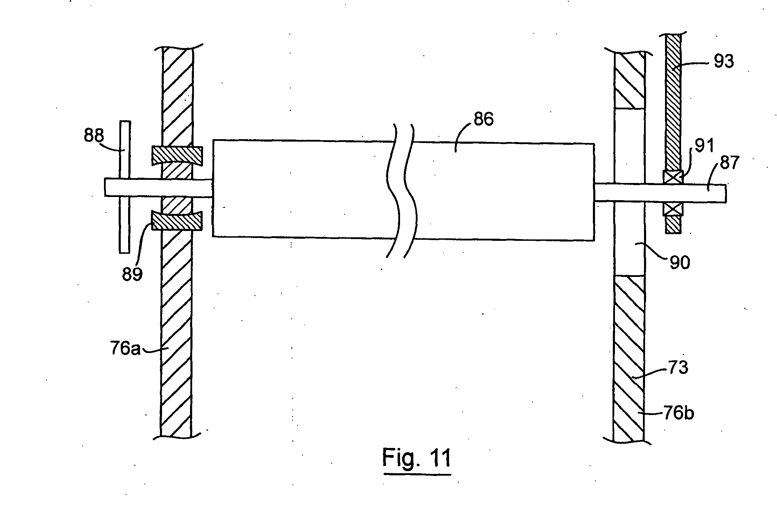

Referring now to Figs. 5 to 12, there is illustrated a baler according to another embodiment of the invention, indicated generally by the reference numeral 70 for forming a bale of material, in this embodiment of the invention forage material into a cylindrical bale 2, and for circumferentially wrapping the formed bale with plastics film material 3, similar to the film material 3 described with reference to the baler of Figs. 1 to 4 prior to discharge of the bale from the baler 70. Monitoring apparatus also according to the invention, indicated generally by the reference numeral 71, is also provided for detecting correct circumferential wrapping of the bale 2 in the bale forming chamber 16, and is described below. The baler 70 is substantially similar to the baler 1, and similar components are identified by the same reference numerals. However, in this embodiment of the invention the baler 70 is similar to a baler which is described in PCT published Application Specification No. WO 02/076183 with reference to Figs. 1 to 8 thereof, and could be provided on its own, or could be provided as a combined baler/bale wrapper as described in PCT published Application Specification No. WO 02/076184. In this embodiment of the invention the housing 10 which forms the bale forming chamber 16 is formed in three parts, namely, a stationary part 72, an upper moveable part 73 and a lower moveable part 74.

The stationary part 72 comprises a pair of spaced apart side walls 75, while the upper moveable part 73 comprises a pair of spaced apart side walls 76, and the lower moveable part 74 comprises a pair of spaced apart side walls 77. The side walls 75, 76 and 77 define opposite ends of the bale forming chamber 16. Bale rotating rollers 20 extend between the pairs of side walls 75, 76 and 77 to define with the pairs of side walls 75, 76 and 77 the bale forming chamber 16, with the bale rotating rollers 20 defining the circumferential periphery of the bale forming chamber 16.

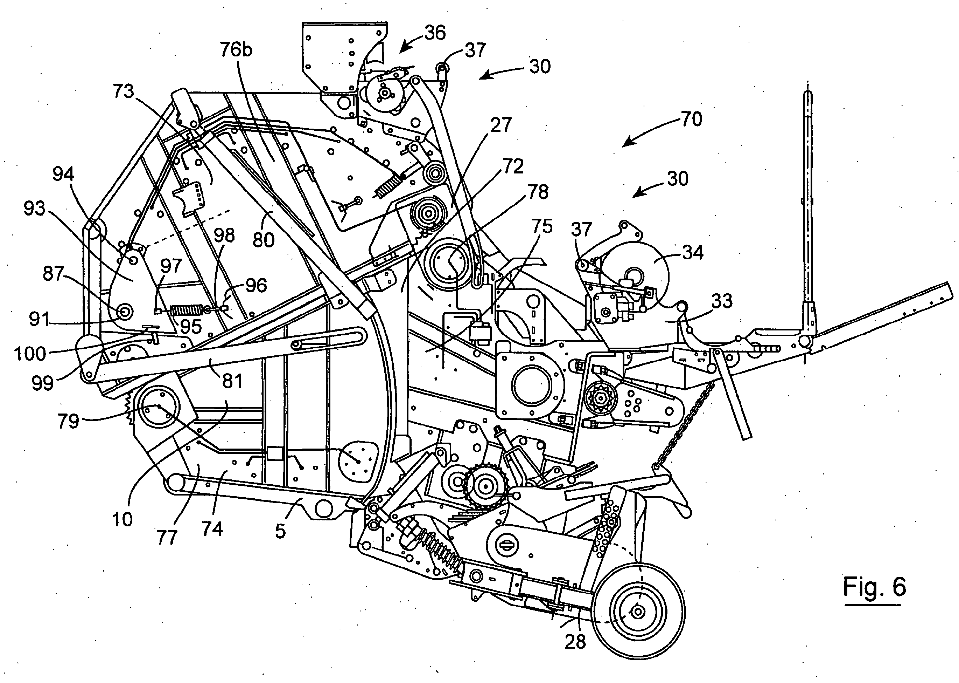

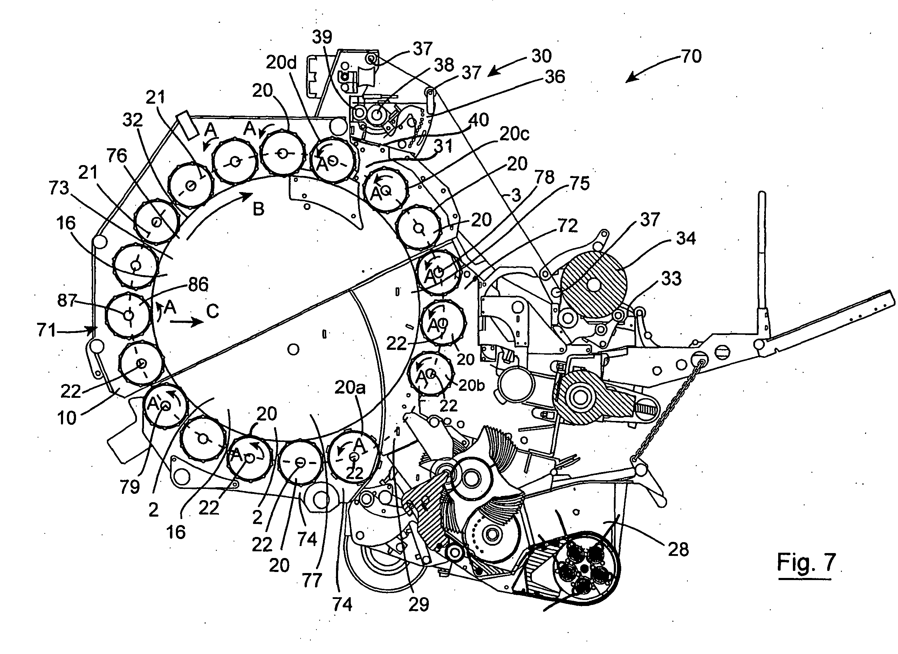

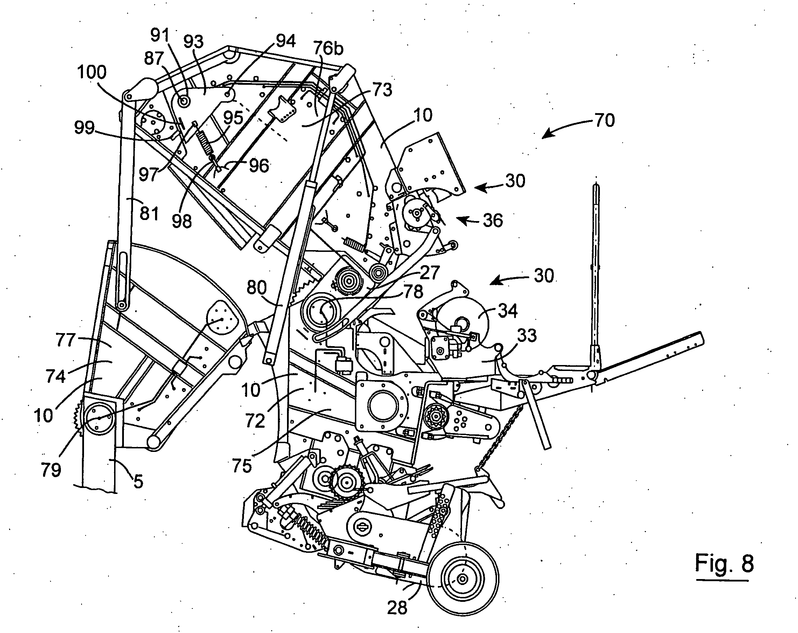

The upper moveable part 73 defines approximately 180° of the circumferential periphery of the bale forming chamber 16, and is pivotal about a pivot axis 78 between a bale forming state illustrated in Figs. 6 and 7 defining with the stationary part 72 and the lower moveable part 74 the bale forming chamber 16, and a discharge state illustrated in Fig. 8 for facilitating discharge of the bale 2 from the bale forming chamber 16.

The lower moveable part 74 of the housing 10 defines approximately 90° of the circumferential periphery of the bale forming chamber 16, and is pivotal about a pivot axis 79 from a bale forming state illustrated in Figs. 6 and 7 forming with the stationary part 72 of the upper moveable part 73 the bale forming chamber 16, and a discharge state illustrated in Fig. 8 for discharging a circumferentially wrapped and formed bale 2 from the bale forming chamber 16. The lower moveable part 74 is supported on the chassis 5 in the bale forming state.

These aspects of the baler 70 are described in PCT Specification No. WO 02/2076183 with reference to Figs. 1 to 8 thereof, and further description of this aspect of the baler 70 should not be required.

A pair of hydraulic rams 80 located on respective opposite sides of the housing 10 and acting between the chassis 5 of the baler 70 and the upper moveable part 73 of the housing 10 urges the upper moveable part 73 between the bale forming state and the discharge state and retains the upper moveable part 73 in the bale forming state with the stationary member 72 and the lower moveable part 74 defining the bale forming chamber 16. A pair of link members located on opposite sides of the housing 10 are coupled between the upper moveable part 73 of the housing 10 and the lower moveable part 74, so that as the upper moveable part 73 is being urged from the bale forming state to the discharge state, the lower moveable part 74 is urged from the bale forming state to the discharge state for discharging the circumferentially wrapped formed bale from the bale forming chamber 16. The upper and lower parts 73 and 74 of the housing 10 are returned to the bale forming state by the hydraulic rams 80.

An hydraulic circuit (not shown) operating under the control of a microcontroller 60 controls the operation of the hydraulic rams 80 for operating the upper and lower moveable parts 73 and 74 of the housing 10 between the bale forming state and the discharge state.

The monitoring apparatus 71 in this embodiment of the invention comprises a monitoring means for monitoring a characteristic indicative of the radial outward pressure being exerted by the bale 2 in the bale forming chamber 16 on the bale rotating rollers 20, which in this embodiment of the invention is the diameter of the bale 2. The monitoring means of the monitoring apparatus 71 according to this embodiment of the invention comprises a bale follower element which is provided by a bale follower roller 86 which is similar to the bale rotating rollers 20, and is rigidly mounted on a carrier shaft 87. A sprocket 88 on the carrier shaft 87 is driven by the chain (not shown) which drives the bale rotating rollers 20 for rotating the bale follower roller 86 also.in the direction of the arrow A at a similar rotational speed to that of the bale rotating rollers 20. The bale follower roller 86 is located in the upper moveable part 73 of the housing 10, and the carrier shaft 87 is rotatably carried in one of the side walls 76, namely, the side wall 76a of the upper moveable part 73 in a spherical bearing 89, which is located on the pitch circle 21 of the bale rotating rollers 20. The spherical bearing 89 permits angular movement of the carrier shaft 87, and in turn angular movement of the bale follower roller 86 into and out of the bale forming chamber 16. The other end of the carrier shaft 87 extends through a radially extending slot 90 in the other of the side walls 76, namely, the side wall 76b of the upper moveable part 73 for accommodating the angular inward and outward movement of the bale follower roller 86 into and out of the bale forming chamber 16, so that the bale follower roller 86 engages and follows the circumferential surface of the bale 2 in the bale forming chamber 16.

The end of the carrier shaft 87 of the bale follower roller 86 which extends through the slot 90 in the side wall 76b of the upper moveable part 73 of the housing 10 is rotatably in a bearing 91 which is carried in a plate member 93. The plate member 93 in turn is pivotally carried on a pivot shaft 94 extending from the adjacent side wall 76b for accommodating radial inward and outward movement of the carrier shaft 87 in the slot 90, and in turn radial inward and outward movement of the bale follower roller 86 into and out of the bale forming chamber 16. A biasing means, in this embodiment of the invention a tension spring 95 acting between the plate member 93 and an anchor bracket 96 mounted on the corresponding side wall 76 of the upper moveable part 73 biases the plate member 93 in the direction of the arrow C for in turn biasing the bale follower roller 86 inwardly in the direction of the arrow C into the bale forming chamber 16, and in turn into engagement with the circumferential surface 32 of the bale 2, so that the bale follower roller 86 follows the circumferential surface 32 of the bale 2. The tension spring 95 is coupled to the plate member 93 by a coupling bracket 97. An eye bolt 98 adjustably couples the tension spring 95 to the anchor bracket 96 for adjusting the tension in the spring 95, for in turn adjusting the force with which the bale follower roller 86 is urged into engagement with the circumferential surface 32 of the bale 2.

In this embodiment of the invention the bale follower roller 86 is located approximately 270° around the circumferential periphery of the bale forming chamber 16 from the wrapping film inlet 31 defined between the bale rotating rollers 20c and 20d in a generally downstream direction from the wrapping film inlet 31 relative to the direction in which the wrapping film 3 is dispensed into the bale forming chamber 16.

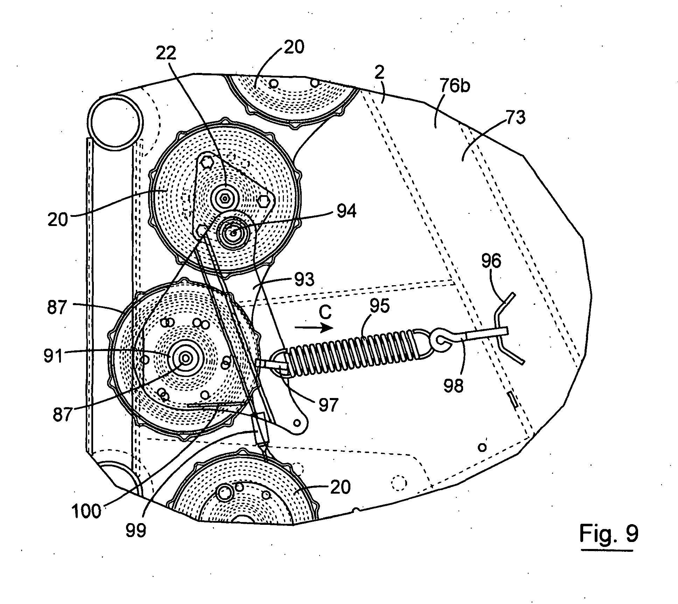

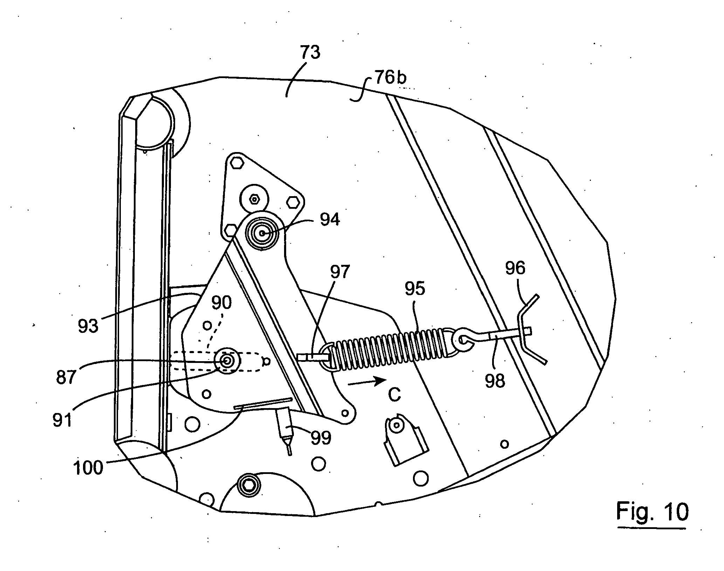

A sensing means for detecting inward movement of the bale follower roller 86 in the direction of the arrow C into the bale forming chamber 16 comprises a proximity sensor 99 mounted on the corresponding side wall 76 of the upper moveable part 73 of the housing 10 adjacent the plate member 93. A detectable element 100 mounted on the plate member 93 is detectable by the proximity sensor 99 for detecting the inward movement of the bale follower roller 86, see in particular Figs. 9 and 10. The proximity sensor 99 and the detectable element 100 are disposed relative to each other, so that as the diameter of the bale 2 in the bale forming chamber 16 commences to reduce as a result of wrapping of the bale with the wrapping film 3, which in turn results in a reduction in the radial outward pressure being exerted by the bale 2 on the bale rotating rollers 20, the detectable element 100 is detected by the proximity sensor 99 when the reduction in the diameter of the bale 2 from the commencement of dispensing of the wrapping film 3 into the bale forming chamber is greater than a predefined diameter reduction, which in turn corresponds to the predefined reduction in the radial outward pressure exerted by the bale in the bale forming chamber which is indicative of correct circumferential wrapping of the bale. The plate member 93 is illustrated in Fig. 10 in the state relative to the proximity sensor 99 which corresponds to the bale being correctly circumferentially wrapped. Accordingly, the state of the plate member 93 relative to the proximity sensor 99 illustrated in Fig. 10 corresponds to the predefined reduction in the diameter of the bale from the commencement of dispensing of the wrapping film 3 into the bale forming chamber 16, which in turn corresponds to the predefined reduction in the radial outward pressure being exerted by the bale in the bale forming chamber which is indicative of correct circumferential wrapping of the bale.

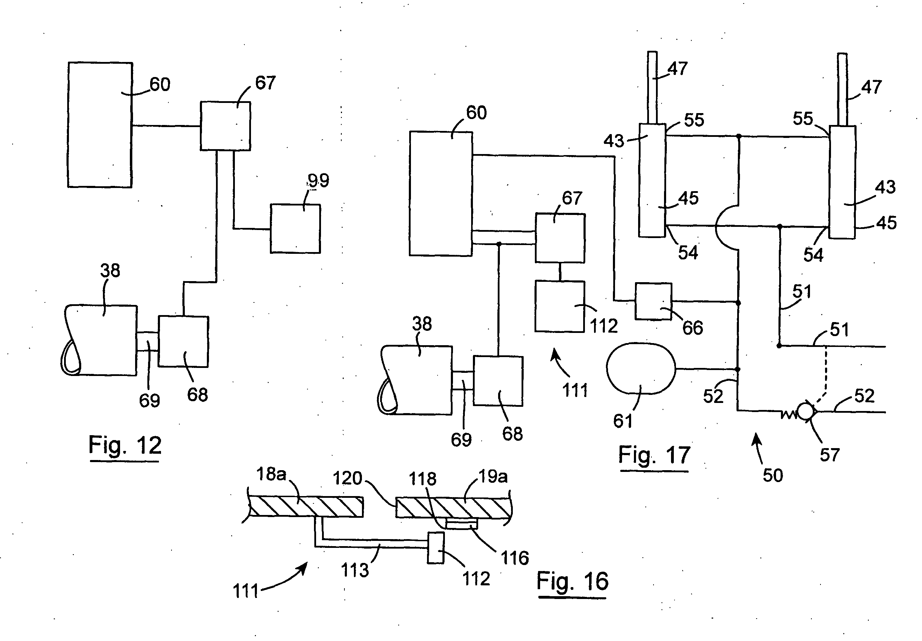

The signal processor 67 reads signals produced by the proximity sensor 99, see Fig. 12, and is programmed so that on detecting a signal indicative of the detectable element 100 having been detected by the proximity sensor 99, which in turn is indicative of the bale 2 in the bale forming chamber 16 being correctly circumferentially wrapped, the signal processor 67 produces a signal indicative of correct circumferential wrapping of the bale 2. If the signal processor 67 fails to detect a signal from the proximity sensor 99 indicative of the detectable element 100 having been detected by the proximity sensor 99 within the predefined period, as already described with reference to the baler of Figs. 1 to 5, the signal processor 67 produces a signal indicative of failure of correct circumferential wrapping of the bale. In this embodiment of the invention, the predefined period is also of duration which corresponds to the time from the commencement of dispensing of the wrapping film 3 into the bale forming chamber 16 until the bale has been circumferentially wrapped with two and a quarter turns of the wrapping film 3. This time period corresponds approximately to the time required for the bale 2 to rotate in the bale forming chamber 16 for approximately two and a half revolutions. The signal processor 67 determines the predefined period from signals read from the rotary encoder 68 on the feed roller 38, see Fig. 12, or may determine the predefined period from signals read from a rotary encoder mounted on one of the shafts 22 of the bale rotating rollers 20, or on the carrier shaft 87 of the bale follower roller 86.

The microcontroller 60 on detecting the signal from the signal processor 67 being indicative of correct circumferential wrapping of the bale, operates the baler to complete circumferential wrapping of the bale 2 in the bale forming chamber 16, and then operates the hydraulic rams 80 for urging the upper moveable part 73 and the lower moveable part 74 into the discharge state for discharging the circumferentially wrapped bale 2 from the bale forming chamber 16. On the other hand, should the microcontroller 60 detect the signal produced by the signal processor 67 which is indicative of failure of correct wrapping of the bale 2, the microcontroller 60 immediately terminates circumferential wrapping of the bale 2 in the bale forming chamber 16, and deactivates the baler 70, so that corrective action can be taken and activates the alarm.

Otherwise, the baler 70 and its operation is substantially similar to the baler 1.

It is also envisaged that the proximity sensor 99 of the monitoring apparatus 71 for detecting correct circumferential wrapping of a bale 2 in the bale forming chamber 16 of the baler 70 may be replaced by a potentiometer sensor, which would permit continuous monitoring of the movement of the plate member 93. This in turn would permit continuous monitoring of the diameter of the bale 2 in the bale forming chamber 16, and would allow the signal indicative of correct circumferential wrapping of the bale 2 which is produced by the signal processor 67 to be based on a change in the rate of reduction of the diameter of the bale, rather than the reduction in diameter of the bale as the bale is being circumferentially wrapped with the wrapping film 3.

As described with reference to the baler 1 of Figs. 1 to 5, the predefined value of the reduction of the diameter of the bale 2, and the predefined change value in the rate of reduction in the diameter of the bale 2 which is indicative of correct circumferential wrapping of the bale 2 is dependent on the type of material from which the bale 2 is formed and the desired size of the bale, and in general will initially be determined by trial and error.

Typically, a plurality of settings of one or other of the proximity sensor 99 and the detectable element 100 relative to the other, which correspond to predefined reductions in the diameter of the bale, which in turn correspond with the predefined reductions in the radial outward pressure exerted by the bale in the bale forming chamber, which are indicative of correct circumferential wrapping of the bale, will be determined for different types of material to be baled. The respective settings of the proximity sensor 99 or the detectable element 100 will be suitably marked on the side wall of the corresponding one of the stationary or moveable part of the housing of the baler. This will enable the relevant one of the proximity sensor 99 and the detectable element 100 to be appropriately set for the material to be baled, prior to commencing baling of the material. Indeed, in cases where the monitoring means comprises a potentiometer sensor, which would permit continuous monitoring of the diameter of the bale, the predefined reductions in the diameter of the bale, which correspond with the predefined reductions in the radial outward pressure exerted by the bale in the bale forming chamber, which are indicative of correct circumferential wrapping of the bale, for different materials would be electronically stored in a suitable electronic memory in the signal processor 67. The signal processor 67 would then be programmed to continuously compute the current reduction in the diameter of the bale from the value of the diameter at the commencement of dispensing of the wrapping film 3 into the bale forming chamber 16. The signal processor 67 would then compare the currently computed value of the reduction in the diameter of the bale with the electronically stored corresponding predefined value of the reduction in the diameter of the bale for the relevant material.

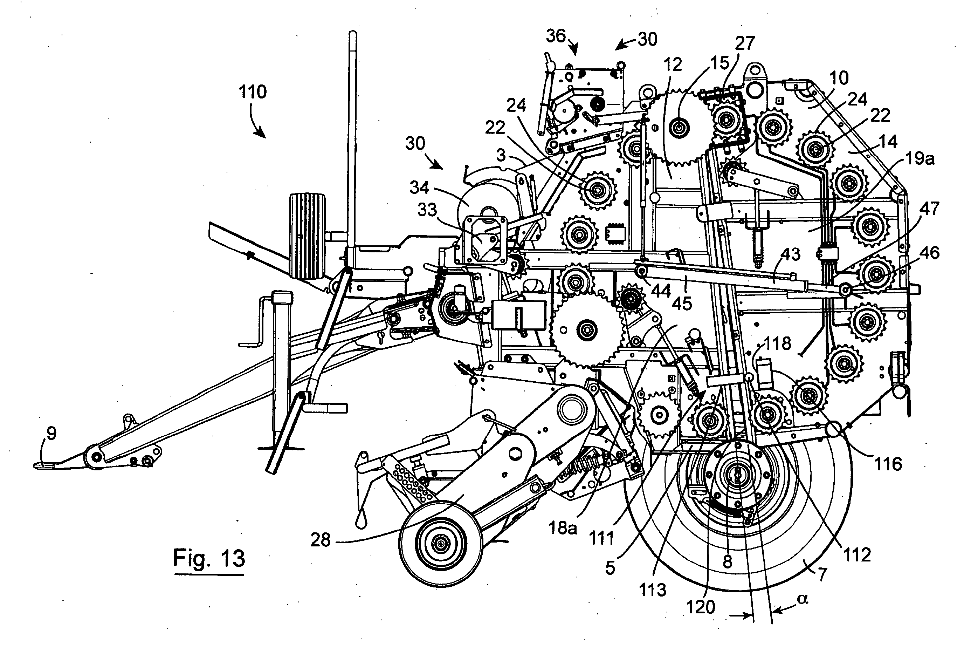

Referring now to Figs. 13 to 17, there is illustrated a baler according to another embodiment of the invention, indicated generally by the reference numeral 110 for forming a cylindrical bale 2 of forage material, and for circumferentially wrapping the bale 2 with wrapping film 3. The baler 110 comprises monitoring apparatus 111, also according to the invention and indicated generally by the reference numeral 111 for detecting correct circumferential wrapping of the bale 2 with the wrapping film 3. The baler 110 is substantially similar to the baler 1 described with reference to Figs. 1 to 5, and similar components are identified by the same reference numerals. The only difference between the baler 110 and the baler 1 is in the monitoring apparatus 111 for detecting correct circumferential wrapping of the bale 2. The monitoring apparatus 111 comprises a monitoring means for monitoring a characteristic indicative of the radial outward pressure being exerted by the bale 2 in the bale forming chamber 16, which in this embodiment of the invention is movement of the moveable part 14 of the housing 10 towards the stationary part 12 thereof. The monitoring means comprises a sensing means, namely, a proximity sensor 112 which is carried on a carrier bracket 113 mounted on and extending from one of the side walls 18, namely, the side wall 18a of the stationary part 12 of the housing 10. A detectable element 116 which is mounted on the adjacent side wall 19, namely, the side wall 19a of the moveable part 14 of the housing 10 defines a detectable edge 118 which is detectable by the proximity sensor 112. The detectable element 116 is located on the moveable part 14 of the housing 10 so that the detectable edge 118 thereof is detectable by the proximity sensor 112 as the moveable part 14 of the housing 10 moves towards the stationary part 12 thereof in response to the radial outward pressure being exerted by the bale 2 in the bale forming chamber 16 on the bale rotating rollers 20 reducing as a result of circumferential wrapping of the bale 2 in the bale forming chamber 16.

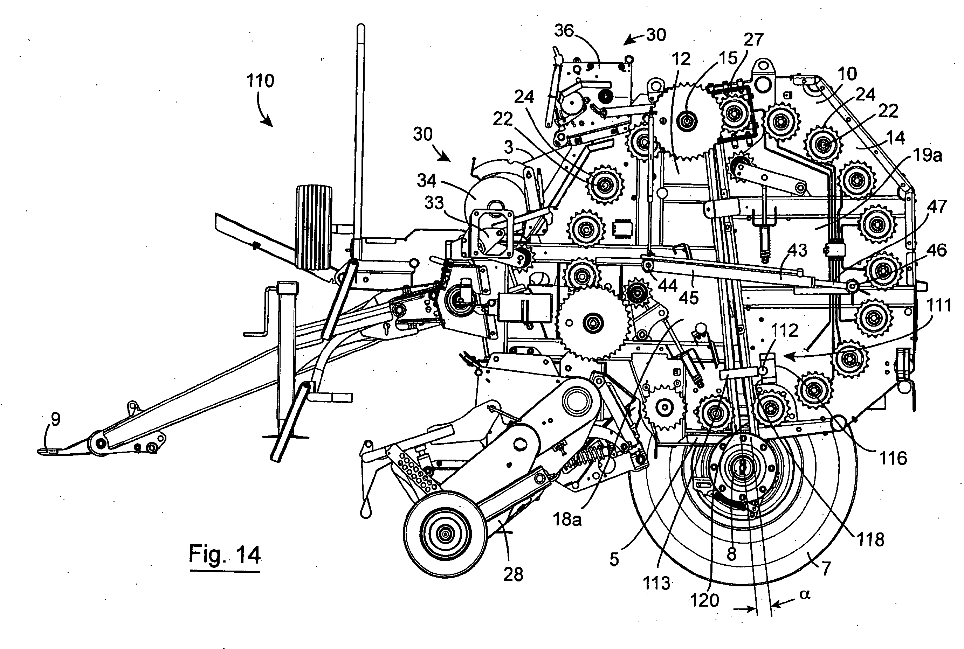

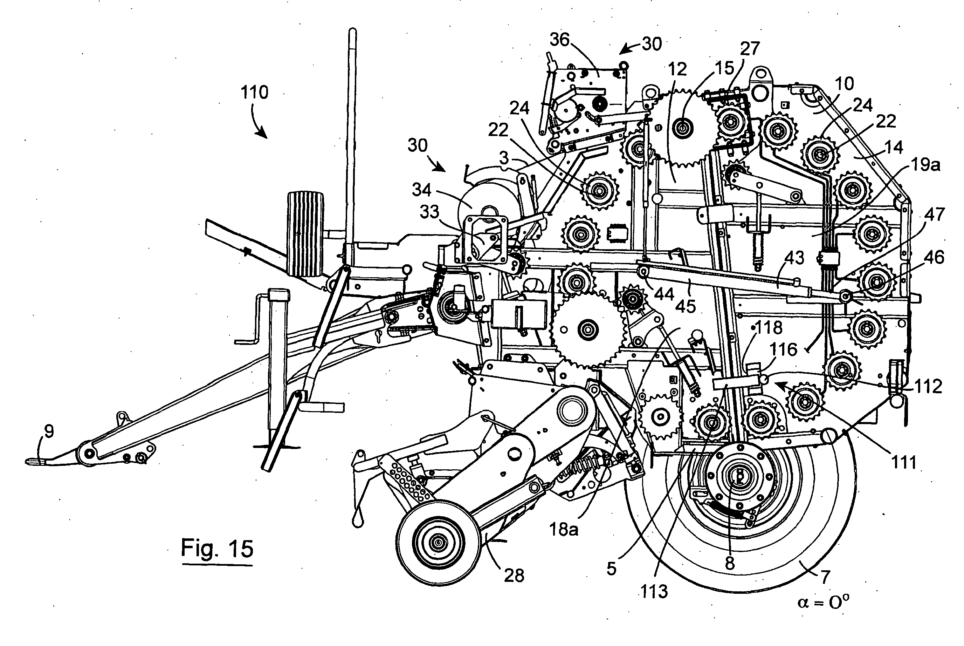

It has been found that even with the moveable part 14 of the housing 10 being retained in the bale forming state by the hydraulic rams 43 with the check valve 57 in the non-return first state, as described with reference to the baler 1 of Figs. 1 to 5, the radial outward pressure exerted by the bale 2 on the bale rotating rollers 20 results in slight pivoting of the moveable part 14 of the housing 10 outwardly from the stationary part 12 about the pivot axis 15 to define an angular gap 120 between the moveable part 14 and the stationary part 12 about the pivot axis 15, which defines an angle α about the pivot axis 15. This outward pivoting of the moveable part 14 from the stationary part 12 is indicative of the radial outward pressure being exerted by the bale 2 on the bale forming chamber 16. The angle α defined by the gap 120 is at its maximum just when the bale 2 has been formed to the desired size and the radial outward pressure being exerted by the bale 2 in the bale forming chamber 16 is at the predefined maximum value, see Fig. 13. As the bale 2 is being circumferentially wrapped in the bale forming chamber 16 with the wrapping film 3, the resulting reduction in the radial outward pressure being exerted by the bale 2 on the bale forming rollers 20 results in the moveable member 14 pivoting inwardly about the pivot axis 15 towards the stationary part 12, thus reducing the angle α defined by the gap 120 between the moveable part 14 and the stationary part 12, see Figs. 14 and 15.

The proximity sensor 112 and the detectable element 116 are disposed relative to each other so that the detectable edge 118 of the detectable element 116 is detected by the proximity sensor 112 when the angle α defined by the gap 120 has reduced by a predefined angle value from its value at the commencement of dispensing of wrapping film 3 into the bale forming chamber 16, which corresponds with the predefined reduction in the radial outward pressure exerted by the bale in the bale forming chamber from the commencement of dispensing of wrapping film 3 into the bale forming chamber 16, which is in turn indicative of correct circumferential wrapping of the bale. In Fig. 13 the angle α defined by the gap 120 is of the predefined maximum value which corresponds to the bale having been formed to the desired size. In Fig. 14 the angle α defined by the gap 120 is the angle which corresponds to the angle at which the reduction in the angle at which the reduction in the angle α from the predefined maximum value illustrated in Fig. 13 corresponds to the predefined reduction in the radial outward pressure exerted by the bale in the bale forming chamber 16 which is indicative of correct circumferential wrapping of the bale. The proximity sensor 112 is disposed relative to the detectable element 116 so that the detectable edge 118 of the detectable element 116 is just detected by the proximity sensor 112 when the angle α defined by the gap 120 has reduced to the value of Fig. 15 which is indicative of correct circumferential wrapping of the bale.

The signal processor 67 reads signals from the proximity sensor 112, see Fig. 17, and determines when the signals read from the proximity sensor 112 are indicative of the angle α defined by the gap 120 having reduced by the predefined angle value from its value at the commencement of dispensing of wrapping film 3 into the bale forming chamber 16, which is indicative of correct circumferential wrapping of the bale. On the signal processor 67 determining that the signals read from the proximity sensor 112 are indicative of correct circumferential wrapping of the bale, the signal processor 67 produces the signal indicative of correct circumferential wrapping of the bale.

On the other hand, if within the predefined period from the commencement of dispensing of the wrapping film 3 into the bale forming chamber 16, the signals read from the proximity sensor 112 by the signal processor 67 are not indicative of correct circumferential wrapping of the bale 2, the signal processor 67 produces the signal indicative of failure of correct circumferential wrapping of the bale. The predefined period in this embodiment of the invention is similar to the predefined period described with reference to the baler 1 of Figs. 1 to 5.

The microcontroller 60 in response to the signals produced by the signal processor 67 being indicative of correct circumferential wrapping of the bale proceeds with the circumferential wrapping of the bale 2 in the bale forming chamber 16. On the other hand, on the microcontroller 60 detecting the signal indicative of failure of correct circumferential wrapping of the bale, the microcontroller 60 terminates wrapping of the bale and activates the alarm.

Otherwise, the baler 110 and its operation is similar to that already described with reference to the baler 1.

The provision of suitably and appropriately marked setting positions for one of the proximity sensor 112 and the detectable element 116 on the side walls 18a and 19a of the corresponding one of the stationary and moveable parts 12 and 14 of the housing 10 of the baler 110 will be provided in a similar manner as that described for the relevant one of the proximity sensor 99 and the detectable element 100 of the baler 70. Additionally, in cases where the proximity sensor 112 is replaced with a potentiometer sensor, which would allow for continuous monitoring of the angle α defined by the gap 120, predefined values of the angle α could be electronically stored in a suitable electronic memory in the signal processor 67 which would correspond with the predefined reductions in the radial outward pressure exerted by the bale in the bale forming chamber which are indicative of correct circumferential wrapping of the bale for the various materials to be baled. The signal processor 67 would continuously compute the angle α defined by the gap 120 from signals read from the potentiometer sensor, and would compute the corresponding reduction in the angle α from its value at the commencement of dispensing of the wrapping film into the bale forming chamber. When the computed reduction in the angle α defined by the gap 120 corresponded with the electronically stored predefined reduction in the value of the angle α for the material being baled, the signal processor would output the signal indicative of correct circumferential wrapping of the bale. On the other hand, in the absence of the computed reduction in the value of the angle α failing to exceed the corresponding electronically stored predefined value of the reduction of the angle α within the predefined period, the signal processor 67 would produce the signal indicative of failure of correct circumferential wrapping of the bale.

Any suitable means for determining when the bale has been formed to the desired size in the baler 1, the baler 70 and the baler 110 may be used. The determination of the bale having been formed to the desired size may be determined from a pressure transducer similar to the pressure transducer 66 described with reference to the baler 1 whereby the pressure transducer would detect the pressure in the rams retaining the moveable part of the baler in the bale forming state during formation of the bale as already described with reference to the baler 1. Alternatively, the bale may be determined as having been formed to the desired size by monitoring a gap, similar to the gap 120 described with reference to the baler 110 between the moveable and a stationary part of the housing of the baler. Needless to say, any other suitable methods for determining when the bale has been formed to the desired size may be used.

In all the balers 1, 70 and 110, typically, the bale is circumferentially wrapped with anywhere between three and eight turns of the wrapping film, and more typically, is circumferentially wrapped with four or five turns of the wrapping film.

It is also envisaged that the proximity sensors 99 and 112 of the balers 70 and 110, respectively, may be replaced with potentiometer sensors, linear transducers or linear inductive sensors, which would continuously monitor either the radial movement of the bale follower roller or the relative movement between the moveable part 14 and the stationary part 12 of the housing 10. This would permit continuous monitoring of the radial outward pressure being exerted by the bale 2 on the bale rotating rollers 20, and thus in the balers 70 and 110, the reduction in the radial outward pressure being exerted on the bale or the change in the rate of reduction thereof could be determined by the signal processor 67 from signals read from the potentiometers, the linear transducers or the linear inductive sensors.

While the monitoring apparatus for detecting correct circumferential wrapping of a bale 2 in the bale forming chamber of a baler has been described as comprising a signal processor 67, it is envisaged that the microcontroller 60 may be programmed with suitable software in order to incorporate the signal processing function of the signal processor 67. Needless to say, while the control means for controlling the operation of the balers has been described as comprising a microcontroller, any other suitable control means may be provided, for example, a microprocessor, or any other suitable signal processor or controlling means.

While the balers have been described as being a fixed chamber baler, it is envisaged that the balers may comprise any type of baler, be they roller balers, belt balers, balers comprising a combination of a belt or belts and a roller or rollers. Indeed, where the baler is provided in the form of a belt baler, it is envisaged that the radial outward pressure exerted on one or more of the belts of the belt baler by the bale in the bale forming chamber would be monitored in order to determine correct or otherwise circumferential wrapping of the bale in the bale forming chamber.

It is also envisaged that the balers may also be provided with a bale wrapper mounted on the chassis or trailed behind the balers so that the circumferentially wrapped bale would be transferred onto the bale wrapper, which would then wrap the bale end to end: In which case, it is envisaged that the bale wrapper could be a two-axis wrapper which would rotate the bale about two axes while the wrapping material is being dispensed onto the bale. Alternatively, the bale wrapper could be of the type which would rotate the bale around one axis, while one or more wrapping material dispensers would be revolved around the bale about a second axis which typically, would extend perpendicularly to the axis about which the bale is being rotated. Typically, the bale would be rotated about its central longitudinal geometrical axis.

It is also envisaged that the signal indicative of the radial outward pressure exerted by the bale in the bale forming chamber may be derived from any other suitable characteristic indicative of the radial outward pressure exerted by the bale in the bale forming chamber other than the pressure in the rams 43 which urge the moveable part of the housing into the bale forming state, the diameter of the bale, and the movement of a moveable part of the housing relative to the stationary part thereof, and a suitable monitoring means for monitoring such a suitable characteristic would be provided.

While the monitoring means of the baler 70 has been described as comprising a rotatably mounted bale follower roller 86, any other suitable monitoring means may be provided. For example, it is envisaged that instead of the bale follower roller, an elongated skid plate could be provided in place of the bale follower roller, or in any other suitable location. The skid plate could be pivotally mounted or otherwise moveably mounted relative to the bale forming chamber, and could be biased into engagement with the formed bale by any suitable urging means, and could be biased into engagement with the formed bale by tension springs in a similar manner as the bale follower roller 86 is urged into engagement with the formed bale. Alternatively, the monitoring means could be provided by a bar extending parallel to and between any pair of the bale rotating rollers, which would be urged by a suitable biasing means into engagement with the circumferential periphery of the bale. Needless to say, any other suitable monitoring means may be provided, and where the monitoring means is provided by a bale follower roller, a skid plate or a bar, the bale follower roller, the skid plate or the bar could be relatively short, and could be located centrally between the side walls of the upper moveable part or any other part of the housing. Indeed, in certain cases a pair of bale follower rollers, skid plates or bars, which would be relatively short, could be located adjacent each end wall of any of the parts of the housing of the baler. Needless to say, the bale follower roller may be located in any of the parts, be they moveable or stationary parts, of the housing.

Needless to say, any other suitable dispensing means for dispensing the wrapping film material into the bale forming chamber may be provided, and the wrapping material dispenser may be located at any suitable location on the balers. Other suitable transitioning means for tensioning the wrapping material may be provided.

It will also be appreciated that any other biasing means for urging the bale follower roller or other suitable monitoring means into engagement with the circumferential periphery of the bale besides a tension spring may be provided. Indeed, in certain cases, it is envisaged that an urging means or a biasing means may be provided by one or more compression spring, or by one or more air springs or any other suitable urging or biasing means for urging the bale follower into engagement with the circumferential surface of the bale. It is also envisaged that the urging means or biasing means for urging the bale follower element into engagement with the circumferential surface of the bale may be provided by a pneumatic spring. Further, it is envisaged that the bale follower element may be urged into engagement with the circumferential surface of the bale by one or more hydraulic rams, and such hydraulic rams could also be hydraulically coupled with the hydraulic rams for urging a moveable part of the baler into engagement with a stationary part thereof for retaining the moveable part in the bale forming state. In which case, the bale follower element would be urged into engagement with the circumferential surface of the bale in the bale forming chamber with a pressure which corresponds to the hydraulic pressure being exerted by the hydraulic ram retaining the moveable part of the housing of the baler in the bale forming state during forming and wrapping of the bale in the bale forming chamber.

While the sensing means for detecting inward movement of the bale follower roller has been described as comprising a proximity sensor, any other suitable sensing means may be provided, and where the sensing means is provided by a proximity sensor, the proximity sensor may be any suitable type of proximity sensor, for example, an ultrasonic detector for detecting the detectable element, an optical sensor, or any other suitable proximity sensor.

While the predefined period from the commencement of dispensing of the wrapping film into the bale forming chamber has been described as being timed by a count of the number of revolutions of the feed roller 38 or one of the bale rotating rollers, it will be appreciated that any other suitable timing means for timing the predefined period from the commencement of dispensing of the wrapping film into the bale forming chamber may be used. For example, a timer which would specifically time time could be used.

While the wrapping material with which the bale is circumferentially wrapped in the bale forming chamber has been described as being a film of plastics material which is adhesive coated on one side, any other suitable wrapping material may be used, and where the wrapping material is a wrapping film of plastics, the wrapping film may or may not be provided with an adhesive coating. It is also envisaged that the wrapping material may be a net material, and needless to say, any other suitable wrapping materials may be used for circumferentially wrapping the bale in the bale forming chamber

While the pressure indicative of the radial outward pressure exerted by the bale in the bale forming chamber has been derived from a pressure transducer which monitors the pressure in the rams 43 which retain the moveable part 14 of the housing 10 in the bale forming state during forming and dropping of the bale in the bale forming chamber of the baler 1 described with reference to Figs. 1 to 5, it is envisaged that any other suitable means for detecting the radial outward pressure exerted by the bale in the bale forming chamber may be used. Needless to say, where the hydraulic pressure in the ram 43 is being detected, any other suitable detecting means for detecting the pressure in the hydraulic rams may be used.

Additionally, while the predefined period has been described as being the time required from the commencement of dispensing of wrapping material into the bale forming chamber for the bale to be circumferentially wrapped with two and a quarter turns of the wrapping material, it is envisaged that the predefined period may be shorter than the time required to circumferentially wrap the bale with two and a quarter turns of the wrapping material. Indeed, it has been found that once the bale has been completely circumferentially wrapped with one complete turn of the wrapping material, and the circumferential wrapping of the bale with the second turn has commenced, so that there is an overlap of the wrapping material on the bale, a detection in the drop in radial outward pressure being exerted by the bale in the bale forming chamber can be detected. However, it has been found in general that a more significant drop in the radial outward pressure being exerted by the bale in the bale forming chamber is detectable after the bale has been circumferentially wrapped with two complete turns of the wrapping material. It is therefore for this reason that the predefined period has been selected to be the time required for circumferentially wrapping the bale with two and a quarter turns of the wrapping material from the commencement of dispensing of wrapping material into the bale forming chamber, in order to ensure an overlap between the commencement of the third turn of the wrapping material and the second turn of the wrapping material. Needless to say, the predefined period could be a time period which would be greater than or less than the time period required to circumferentially wrap the bale in the bale forming chamber with two and a quarter turns of the wrapping material.

While in the baler 110 the monitoring means has been described for monitoring the angle defined by the gap between the moveable part and the stationary part of the housing of the baler, it will be appreciated that the monitoring means may monitor any characteristic of movement of the moveable part of the housing relative to the stationary part thereof, which would be indicative of the radial outward pressure exerted by the bale in the bale forming chamber, and may measure any other aspect of the spacing between the moveable part and the stationary part of the housing. In which case, the characteristic which would be monitored would be an appropriate aspect of the relative movement between the moveable part and the stationary part of the housing, or the spacing between the moveable part and the stationary part of the housing. The monitored characteristic which would be compared with a predefined value of that characteristic could, for example, be based on the linear spacing between the moveable part and the stationary part, and the predefined characteristic would then be, for example, a predefined reduction in the linear spacing between the movable part and the stationary part which would correspond with the predefined reduction in the radial outward pressure being exerted by the bale in the bale forming chamber, which would be indicative of correct circumferential wrapping of the bale.

While in the description of the baler 1 with reference to Figs. 1 to 5, specific values of hydraulic pressure in the hydraulic rams 43 which correspond to the hydraulic pressure at which the bale is determined to be formed to the desired size, the bale is determined to be correctly wrapped or otherwise, and other parameters of the bale. These values of hydraulic pressure are given for the purpose of example only, and are not to be considered as limiting the invention in any way. As discussed above, these values will vary significantly depending on the type of baler, the type of material being baled and the size of the bale.

## Claims

1. A method for detecting correct circumferential wrapping of a bale of material in a bale forming chamber (16) of a baler (1,70,110) with wrapping material (3), the method comprising monitoring a characteristic indicative of the radial outward pressure exerted by the bale (2) in the bale forming chamber (16) during dispensing of the wrapping material (3) into the bale forming chamber (16), determining correct circumferential wrapping of the bale (2) in response to the monitored characteristic being indicative of one of a reduction in the radial outward pressure exerted by the bale (2) in the bale forming chamber (16) and a change in the rate of reduction in the radial outward pressure exerted by the bale (2) in the bale forming chamber (16).

2. A method as claimed in Claim 1 **characterised in that** correct circumferential wrapping of the bale (2) is determined in response to the monitored characteristic being indicative of the reduction in the radial outward pressure exerted by the bale (2) exceeding a predefined pressure drop.

3. A method as claimed in Claim 2 **characterised in that** correct circumferential wrapping of the bale (2) is determined in response to the monitored characteristic being indicative of the reduction in the radial outward pressure exerted by the bale (2) exceeding the predefined pressure drop within a predefined period from the commencement of dispensing of the wrapping material (3) into the bale forming chamber (16).

4. A method as claimed in any preceding claim **characterised in that** correct circumferential wrapping of the bale (2) is determined in response to the monitored characteristic being indicative of a change in the rate of reduction of the radial outward pressure exerted by the bale (2) being greater than a predefined change in the rate of reduction of the radial outward pressure exerted by the bale (2).

5. A method as claimed in Claim 4 **characterised in that** correct circumferential wrapping of the bale (2) is determined in response to the monitored characteristic being indicative of the change in the rate of reduction of the radial outward pressure exerted by the bale (2) being greater than the predefined change within a predefined period from commencement of dispensing of the wrapping material (3) into the bale forming chamber (16).

6. A method as claimed in any preceding claim **characterised in that** the method is adapted for use with a baler (1,70,110) comprising a housing (10) defining the bale forming chamber (16) therein, and the monitored characteristic is a characteristic indicative of a compressive radial force exerted by the housing (10) on the bale (2) in the bale forming chamber (16).

7. A method as claimed in Claim 6 **characterised in that** the housing (10) of the baler comprises at least two parts (12,14,72,73), the parts of the housing (10) together defining the bale forming chamber (16), and being urged together by an urging means (43) to form the bale forming chamber (16), the monitored characteristic being a characteristic indicative of the force being applied by the urging means (43) to urge the parts of the housing (10) together.

8. A method as claimed in any preceding claim **characterised in that** the monitored characteristic is a characteristic indicative of movement of one of the parts (12,14,72,73) of the housing (10) relative to the other (12,14,72,73).

9. A method as claimed in any preceding claim **characterised in that** the wrapping material (3) comprises sheet material.

10. Monitoring apparatus for detecting correct circumferential wrapping of a bale (2) of material in a bale forming chamber (16) of a baler (1,70,110) with wrapping material (3), **characterised in that** the monitoring apparatus (4,71,111) comprises a monitoring means (66,86,99,112,116) adapted to monitor a characteristic indicative of the radial outward pressure exerted by the bale (2) in the bale forming chamber (16) during dispensing of the wrapping material (3) into the bale forming chamber (16), and a means (67) for determining correct circumferential wrapping of the bale (2), the means (67) for determining correct circumferential wrapping of the bale being adapted to be responsive to the monitored characteristic monitored by the monitoring means (66,86,99,112,116) being indicative of one of a reduction in the radial outward pressure exerted by the bale (2) in the bale forming chamber (16), and a change in the rate of reduction in the radial outward pressure exerted by the bale (2) in the bale forming chamber (16) for determining correct circumferential wrapping of the bale (2).

11. Monitoring apparatus as claimed in Claim 10 **characterised in that** the means (67) for determining correct circumferential wrapping of the bale (2) is responsive to the monitored characteristic monitored by the monitoring means (66,86,99,112,116) being indicative of the reduction in the radial outward pressure exerted by the bale (2) exceeding a predefined pressure drop for determining correct circumferential wrapping of the bale (2).

12. Monitoring apparatus as claimed in Claim 10 or 11 **characterised in that** the means (67) for determining correct circumferential wrapping of the bale (2) is responsive to the monitored characteristic monitored by the monitoring means (66,86,99,112,116) being indicative of a change in the rate of reduction in the radial outward pressure exerted by the bale (2) being greater than a predefined change in the rate of reduction of the radial outward pressure exerted by the bale (2) for determining correct circumferential wrapping of the bale (2).

13. Monitoring apparatus as claimed in any of Claims 10 to 12 **characterised in that** the monitoring apparatus (4,71,111) is adapted for use with a baler (1,70,110) comprising a housing (10) defining the bale forming chamber (16) therein, and the characteristic indicative of the radial outward pressure exerted by the bale (2) monitored by the monitoring means (66,86,99,112,116) comprises a characteristic indicative of a compressive radial force exerted by the housing (10) on the bale (2) in the bale forming chamber (16).

14. A baler for forming material into a circumferentially wrapped cylindrical bale (2), the baler (1,70,110) defining a bale forming chamber (16) within which the material is formed into a bale (2), a dispensing means (30) for dispensing wrapping material (3) into the bale forming chamber (16) for circumferentially wrapping a formed bale (2) therein, **characterised in that** the baler comprises monitoring apparatus (4,71,111) as claimed in any of Claims 10 to 13 for detecting correct circumferential wrapping of the bale (2) with the wrapping material (3), and a control means (60) for controlling dispensing of the wrapping material into the bale forming chamber, the control means (60) being responsive to the absence of the signal from the monitoring apparatus (4,71,111) indicative of correct circumferential wrapping of the bale (2) for terminating circumferential wrapping of the bale (2) in the bale forming chamber (16).

15. A baler as claimed in Claim 14 **characterised in that** the control means (60) is responsive to the absence of the signal from the monitoring apparatus (4,71,111) indicative of correct circumferential wrapping of the bale within a predefined period from the commencement of dispensing of the wrapping material into the bale forming chamber (16) for terminating circumferential wrapping of the bale (2).

## Patentansprüche

1. Verfahren zum Feststellen einer korrekten Umfangsumhüllung eines Materialballens in einer Ballenformkammer (16) einer Ballenpresse (1, 70, 110) mit Wickelmaterial (3), wobei das Verfahren umfasst:
Überwachen einer Eigenschaft, die den vom Ballen (2) in der Ballenformkammer (16) ausgeübten, radial nach außen gerichteten Druck während des Abgebens des Wickelmaterials (3) in die Ballenformkammer (16) angibt,
Feststellen einer korrekten Umfangsumhüllung des Ballens (2) als Reaktion darauf, dass die überwachte Eigenschaft entweder eine Abnahme des vom Ballen (2) in der Ballenformkammer (16) ausgeübten, radial nach außen gerichteten Drucks oder eine Änderung der Abnahmerate des vom Ballen (2) in der Ballenformkammer (16) ausgeübten, radial nach außen gerichteten Drucks angibt.

2. Verfahren nach Anspruch 1,
**dadurch gekennzeichnet, dass** eine korrekte Umfangsumhüllung des Ballens (2) als Reaktion darauf festgestellt wird, dass die überwachte Eigenschaft angibt, dass die Abnahme des vom Ballen (2) ausgeübten, radial nach außen gerichteten Drucks einen vorbestimmten Druckabfall überschreitet.

3. Verfahren nach Anspruch 2,
**dadurch gekennzeichnet, dass** eine korrekte Umfangsumhüllung des Ballens (2) als Reaktion darauf festgestellt wird, dass die überwachte Eigenschaft angibt, dass die Abnahme des vom Hallen (2) ausgeübten, radial nach außen gerichteten Drucks innerhalb einer vorbestimmten Zeitdauer ab Beginn des Abgebens des Wickelmaterials (3) in die Ballenformkammer (16) den vorbestimmten Druckabfall überschreitet.

4. Verfahren nach einem der vorhergehenden Ansprüche,
**dadurch gekennzeichnet, dass** eine korrekte Umfangsumhüllung des Ballens (2) als Reaktion darauf festgestellt wird, dass die überwachte Eigenschaft angibt, dass eine Änderung der Abnahmerate des vom Ballen (2) ausgeübten, radial nach außen gerichteten Drucks größer ist als eine vorbestimmte Änderung der Abnahmerate des vom Ballen (2) ausgeübten, radial nach außen gerichteten Drucks.

5. Verfahren nach Anspruch 4,
**dadurch gekennzeichnet, dass** eine korrekte Umfangsumhüllung des Ballens (2) als Reaktion darauf festgestellt wird, dass die überwachte Eigenschaft angibt, dass die Änderung der Abnahmerate des vom Ballen (2) ausgeübten, radial nach außen gerichteten Drucks innerhalb einer vorbestimmten Zeitdauer ab Beginn des Abgebens des Wickelmaterials (3) in die Ballenformkammer (16) größer ist als die vorbestimmte Änderung.

6. Verfahren nach einem der vorhergehenden Ansprüche,
**dadurch gekennzeichnet, dass** das Verfahren zur Verwendung mit einer Ballenpresse (1, 70, 110) eingerichtet ist, die ein Gehäuse (10) umfasst, das die Ballenformkammer (16) darin festlegt, und dass die überwachte Eigenschaft eine Eigenschaft ist, die eine durch das Gehäuse (10) auf den Ballen (2) in der Ballenformkammer (16) ausgeübte radiale Druckkraft angibt.

7. Verfahren nach Anspruch 6,
**dadurch gekennzeichnet, dass** das Gehäuse (10) der Ballenpresse zumindest zwei Bauteile (12, 14, 72, 73) umfasst, wobei die Bauteile des Gehäuses (10) die Ballenformkammer (16) gemeinsam festlegen und zum Bilden der Ballenformkammer (16) durch eine Spanneinrichtung (43) zusammengedrängt werden, wobei die überwachte Eigenschaft eine Eigenschaft ist, die die durch die Spanneinrichtung (43) zum Zusammendrängen der Bauteile des Gehäuses (10) ausgeübte Kraft angibt.

8. Verfahren nach einem der vorhergehenden Ansprüche,
**dadurch gekennzeichnet, dass** die überwachte Eigenschaft eine Eigenschaft ist, die eine Bewegung eines der Bauteile (12, 14, 72, 73) des Gehäuses (10) relativ zu dem anderen Bauteil (12, 14, 72, 73) angibt.

9. Verfahren nach einem der vorhergehenden Ansprüche,
**dadurch gekennzeichnet, dass** das Wickelmaterial (3) ein bahnförmiges Material umfasst.

10. Überwachungsvorrichtung zum Feststellen einer korrekten Umfangsumhüllung eines Materialballens (2) in einer Ballenformkammer (16) einer Ballenpresse (1, 70, 110) mit Wickelmaterial (3),
**dadurch gekennzeichnet, dass** die Überwachungsvorrichtung (4, 71, 11) ein Überwachungsmittel (66, 86, 99, 112, 116) zum Überwachen einer Eigenschaft, die den vom Ballen (2) in der Ballenformkammer (16) ausgeübten, radial nach außen gerichteten Druck beim Abgeben des Wickelmaterials (3) in die Ballenformkammer (16) angibt, und ein Mittel (67) zum Feststellen einer korrekten Umfangsumhüllung des Ballens (2) umfasst, wobei das Mittel (67) zum Feststellen einer korrekten Umfangsumhüllung des Ballens dazu eingerichtet ist, auf die durch das Überwachungsmittel (66, 86, 99, 112, 116) überwachte Eigenschaft zu reagieren, wenn diese eine Abnahme des vom Ballen (2) in der Ballenformkammer (16) ausgeübten, radial nach außen gerichteten Drucks oder eine Änderung der Abnahmerate des vom Ballen (2) in der Ballenformkammer (16) ausgeübten, radial nach außen gerichteten Drucks angibt, um eine korrekte Umfangsumhüllung des Ballens (2) festzustellen.

11. Überwachungsvorrichtung nach Anspruch 10,
**dadurch gekennzeichnet, dass** das Mittel (67) zum Feststellen einer korrekten Umfangsumhüllung des Ballens (2) auf die durch das Überwachungsmittel (66, 86, 99, 112, 116) überwachte Eigenschaft reagiert, wenn diese anzeigt, dass die Abnahme des vom Ballen (2) in der Ballenformkammer (16) ausgeübten, radial nach außen gerichteten Drucks einen vorbestimmten Druckabfall überschreitet, um eine korrekte Umfangsumhüllung des Ballens (2) festzustellen.

12. Überwachungsvorrichtung nach Anspruch 10 oder 11,
**dadurch gekennzeichnet, dass** das Mittel (67) zum Feststellen einer korrekten Umfangsumhüllung des Ballens (2) auf die durch das Überwachungsmittel (66, 86, 99, 112, 116) überwachte Eigenschaft reagiert, wenn diese anzeigt, dass eine Änderung der Abnahmerate des vom Ballen (2) ausgeübten, radial nach außen gerichteten Drucks größer ist als eine vorbestimmte Änderung der Abnahmerate des vom Ballen (2) ausgeübten, radial nach außen gerichteten Drucks, um eine korrekte Umfangsumhüllung des Ballens (2) zu festzustellen.

13. Überwachungsvorrichtung nach einem der Ansprüche 10 bis 12,
**dadurch gekennzeichnet, dass** die Überwachungsvorrichtung (4, 71, 111) zur Verwendung mit einer Ballenpresse (1, 70, 110) eingerichtet ist, die ein Gehäuse (10) umfasst, das die Ballenformkammer (16) darin festlegt, und dass die durch das Überwachungsmittel (66, 86, 99, 112, 116) überwachte Eigenschaft, die den vom Ballen (2) ausgeübten, radial nach außen gerichteten Druck angibt, eine Eigenschaft umfasst, die eine radiale Druckkraft angibt, die durch das Gehäuse (10) auf den Ballen (2) in der Ballenformkammer (16) ausgeübt wird.

14. Ballenpresse zum Formen von Material in einen umfangsumhüllten zylindrischen Hallen (2), wobei die Ballenpresse (1, 70, 110) festlegt:
eine Ballenformkammer (16), in der das Material zu einem Ballen (2) geformt wird,
ein Abgabemittel (30) zum Abgeben von Wickelmaterial (3) in die Ballenformkammer (16), um darin einen geformten Ballen (2) ringsum zu umwickeln,
**dadurch gekennzeichnet, dass** die Ballenpresse umfasst:
eine Überwachungsvorrichtung (4, 71, 111) nach einem der Ansprüche 10 bis 13 zum Ermitteln einer korrekten Umfangsumhüllung des Ballens (2) mit dem Wickelmaterial (3), und
eine Steuereinheit (60) zum Steuern des Abgebens des Wickelmaterials in die Ballenformkammer, wobei die Steuereinheit (60) auf die Abwesenheit des eine korrekte Umfangsumhüllung des Ballens (2) angebenden Signals der Überwachungsvorrichtung (4, 71, 111) reagiert, um das Umfangsumhüllen des Ballens (2) in der Ballenformkammer (16) zu beenden.

15. Ballenpresse nach Anspruch 14,
**dadurch gekennzeichnet, dass** die Steuereinheit (60) innerhalb einer vorbestimmten Zeitdauer ab Beginn des Abgebens des Wickelmaterials in die Ballenformkammer (16) auf die Abwesenheit des eine korrekte Umfangsumhüllung des Ballens (2) angebenden Signals der Überwachungsvorrichtung (4, 71, 111) reagiert, um das Umfangsumhüllen des Ballens (2) in der Ballenformkammer zu beenden.

## Revendications

1. Procédé permettant de détecter une enveloppement circonférentiel correct d'une balle de matériau dans une chambre de mise en forme de balle (16) d'une presse enrouleuse (1, 70, 110) avec une matériau d'enveloppement (3), le procédé comprenant la surveillance d'une caractéristique qui indique la pression radiale externe exercée par la balle (2) dans la chambre de mise en forme de balle (16) pendant la distribution du matériau d'enveloppement (3) dans la chambre de mise en forme de balle (16), la détermination de l'enveloppement circonférentiel correct de la balle (2) en réponse à la caractéristique surveillée qui indique l'un(e) d'une réduction de la pression radiale externe exercée par la balle (2) dans la chambre de mise en forme de balle (16) et d'un changement du taux de réduction de la pression radiale externe exercée par la balle (2) dans la chambre de mise en forme de balle (16).

2. Procédé tel que revendiqué dans la revendication 1 **caractérisé en ce que** l'enveloppement circonférentiel correct de la balle (2) est détermine en réponse à la caractéristique surveillée qui indique une réduction de la pression radiale externe exercée par la balle (2) dépassant une baisse de pression prédéfinie.

3. Procédé tel que revendiqué dans la revendication 2 **caractérisé en ce que** l'enveloppement circonférentiel correct de la balle (2) est déterminé en réponse à la caractéristique surveillée qui indique une réduction de la pression radiale externe exercée par la balle (2) dépassant la baisse de pression prédéfinie dans une période prédéfinie à partir du début de distribution du matériau d'enveloppement (3) dans la chambre de mise en forme de balle (16).

4. Procédé tel que revendiqué dans l'une des revendications précédentes **caractérisé en ce que** l'enveloppement circonférentiel correct de la balle (2) est déterminé en réponse à la caractéristique surveillée qui indique un changement du taux de réduction de la pression radiale externe exercée par la balle (2) qui est supérieur à un changement prédéfini du taux de réduction de la pression radiale externe exercée par la balle (2).

5. Procédé tel que revendiqué dans la revendication 4 **caractérisé en ce que** l'enveloppement circonférentiel correct de la balle (2) est déterminé en réponse à la caractéristique surveillée qui indique le changement du taux de réduction de la pression radiale externe exercée par la balle (2) qui est supérieur au changement prédéfini dans une période prédéfinie à partir du début de distribution du matériau d'enveloppement (3) dans la chambre de mise en forme de balle (16).

6. Procédé tel que revendiqué dans l'une des revendications précédentes **caractérisé en ce que** le procécé est adapté pour être utilisé avec une presse enrouleuse (1, 70, 110) comprenant un logement (10) définissant la chambre de mise en forme de balle (16) dedans, et la caractéristique surveillée est une caractéristique indicative d'une force radiale de compression exercée par le logement (10) sur la balle (2) dans la chambre de mise en forme de balle (16).

7. Procédé tel que revendiqué dans la revendication 6 **caractérisé en ce que** le logement (10) de la presse enrouleuse comprend au moins deux parties (12, 14, 72, 73), les parties du logement (10) définissant ensemble la chambre de mise en forme de balle (16), et étant poussées ensemble par un moyen de poussée (43) pour former la chambre de mise en forme de balle (16), la caractéristique surveillée étant une caractéristique indicative de la force qui est appliquée par le moyen de poussée (43) pour pousser les parties du logement (10) ensemble.

8. Procédé tel que revendiqué dans l'une des revendications précédentes **caractérisé en ce que** la caractéristique surveillée est une caractéristique indicative du mouvement de l'une des parties (12, 14, 72, 73) du logement (10) par rapport à l'autre (12, 14, 72, 73).

9. Procédé tel que revendiqué dans l'une des revendications précédentes **caractérisé en ce que** le matériau d'enveloppement (3) comprend un matériau en feuille.

10. Appareil de surveillance permettant de détecter un enveloppement circonférentiel correct d'une balle (2) de matériau dans une chambre de mise en forme de balle (16) d'une presse enrouleuse (1, 70, 110) avec un matériau d'enveloppement (3), **caractérisé en ce que** l'appareil de surveillance (4, 71, 111) comprend des moyens de surveillance (66, 86, 99, 112, 116) adaptés pour surveiller une caractéristique indicative de la pression radiale externe exercée par la balle (2) dans la chambre de mise en forme de balle (16) pendant la distribution du matériau d'enveloppement (3) dans la chambre de mise en forme de balle (16), et un moyen (67) permettant de déterminer l'enveloppement circonférentiel correct de la balle (2), le moyen (67) permettant de déterminer l'enveloppement circonférentiel correct de la balle étant adapté pour être sensible à la caractéristique surveillée, surveillée par les moyens de surveillance (66, 86, 99, 112, 116) qui indiquent l'un(e) d'une réduction de la pression radiale externe exercée par la balle (2) dans la chambre de mise en forme de balle (16), et d'un changement du taux de réduction de la pression radiale externe exercée par la balle (2) dans la chambre de mise en forme de balle (16) pour déterminer l'enveloppement circonférentiel correct de la balle (2).

11. Appareil de surveillance tel que revendiqué dans la revendication 10 **caractérisé en ce que** le moyen (67) permettant de déterminer l'enveloppement circonférentiel correct de la balle (2) est sensible à la caractéristique surveillée, surveillée par les moyens de surveillance (66, 86, 99, 112, 116) qui indiquent la réduction de la pression radiale externe exercée par la balle (2) dépassant une baisse de pression prédéfinie pour déterminer l'enveloppement circonférentiel correct de la balle (2).

12. Appareil de surveillance tel que revendiqué dans la revendication 10 ou 11 **caractérisé en ce que** le moyen (67) permettant de déterminer l'enveloppement circonférentiel correct de la balle (2) est sensible à la caractéristique surveillée, surveillée par les moyens de surveillance (66, 86, 99, 112, 116) qui indiquent un changement du taux de réduction de la pression radiale externe exercée par la balle (2) qui est supérieur à un changement prédéfini du taux de réduction de la pression radiale externe exercée par la balle (2) pour déterminer l'enveloppement circonférentiel correct de la balle (2).

13. Appareil de surveillance tel que revendiqué dans l'une des revendications 10 à 12 **caractérisé en ce que** l'appareil de surveillance (4, 71, 111) est adapté pour être utilisé avec une presse enrouleuse (1, 70, 110) comprenant un logement (10) définissant la chambre de mise en forme de balle (16) dedans, et la caractéristique indicative de la pression radiale externe exercée par la balle (2) surveillée par les moyens de surveillance (66, 86, 99, 112, 116) comprend une caractéristique indicative d'une force radiale de compression exercée par le logement (10) sur la balle (2) dans la chambre de mise en forme de balle (16).

14. Presse enrouleuse pour la mise en forme de matériau en balle cylindrique (2) emballée de manière circonférentielle, la presse enrouleuse (1, 70, 110) définissait une chambre de mise en forme de balle (16) dans laquelle le matériau est formé en une balle (2), un moyen de distribution (30) permettant de distribuer un matériau d'enveloppement (3) dans la chambre de mise en forme de balle (16) pour l'enveloppement circonférentiel d'une balle formée (2) dedans, **caractérisée en ce que** la presse enrouleuse comprend un appareil de surveillance (4, 71, 111) tel que revendiqué dans l'une des revendications 10 à 13 permettant de détecter l'enveloppement circonférentiel correct de la balle (2) avec le matériau d'enveloppement (3), et un moyen de commande (60) permettant de commander la distribution du matériau d'enveloppement dans la chambre de mise en forme de balle, le moyen de commande (60) étant sensible à l'absence du signal provenant de l'appareil de surveillance (4, 71, 111) indicatif de l'enveloppement circonférentiel correct de la balle (2) pour terminer l'enveloppement circonférentiel de la balle (2) dans la chambre de mise en forme de balle (16).

15. Presse enrouleuse telle que revendiquée dans la revendication 14 **caractérisée en ce que** le moyen de commande (60) est sensible à l'absence du signal provenant de l'appareil de surveillance (4, 71, 111) indicatif de l'enveloppement circonférentiel correct de la balle dans une période prédéfinie à partir du début de distribution du matériau d'enveloppement dans la chambre de mise en forme de balle (16) pour terminer l'enveloppement circonférentiel de la balle (2).
